# EUROPEAN PATENT APPLICATION

(11) **EP 4 518 513 A1**
(43) Date of publication of application: **05.03.2025**
(21) Application number: 23806679.9
(22) Date of filing: 20.04.2023
(51) Int. Cl.: H04W 72/12

(54) **DATA TRANSMISSION METHOD AND APPARATUS**

(30) Priority: 20.05.2022 CN 202210553387
(71) Applicant: Huawei Technologies Co., Ltd., Shenzhen, Guangdong 518129 (CN)
(72) Inventor: XU, Xiuqiang, Shenzhen, Guangdong 518129 (CN); WANG, Lei, Shenzhen, Guangdong 518129 (CN); CHEN, Yan, Shenzhen, Guangdong 518129 (CN); DU, Yinggang, Shenzhen, Guangdong 518129 (CN)
(74) Representative: Pfenning, Meinig & Partner mbB
(86) International application number: PCT/CN2023/089482
(87) International publication number: WO 2023/221726

(57) **Abstract**

This application provides a data transmission method and apparatus. The method includes: A second terminal apparatus receives first indication information from a first terminal apparatus, where the first indication information indicates that the first terminal apparatus requests to send data to a network device. The second terminal apparatus may further send second indication information to the network device, where the second indication information may indicate that the first terminal apparatus sends the data to the network device. Therefore, the network device may learn, based on the second indication information from the second terminal apparatus, that the first terminal apparatus is to send uplink data, to avoid blind detection performed by the network device due to uncertainty about whether there is uplink transmission of the first terminal apparatus, so that receiving performance of the network device can be improved, and processing complexity of the network device can be reduced.

## Description

### CROSS-REFERENCE TO RELATED APPLICATIONS

This application claims priority to Chinese Patent Application No. 202210553387.8, filed with the China National Intellectual Property Administration on May 20, 2022 and entitled "DATA TRANSMISSION METHOD AND APPARATUS", which is incorporated herein by reference in its entirety.

### TECHNICAL FIELD

This application relates to the field of mobile communication technologies, and in particular, to a data transmission method and apparatus.

### BACKGROUND

In a mobile communication system, for example, a 5th generation mobile communication technology (5th generation mobile communication technology, 5G) new radio (new radio, NR) system, to improve a multiplexing transmission capability of a terminal, in an uplink data transmission process, when the terminal receives uplink grant information and some conditions are met, the terminal may perform uplink transmission based on a time-frequency resource configured by a network device (for example, a base station) for another terminal. This uplink transmission manner may be referred to as uplink opportunistic (opportunistic) transmission or affiliated (affiliated) transmission. The terminal that performs uplink data transmission in the transmission manner may be referred to as a secondary terminal, and the time-frequency resource is allocated by the network device to a primary terminal.

Currently, in the uplink opportunistic transmission, the network device only determines that the primary terminal sends uplink data based on the uplink grant information, but does not determine whether the secondary terminal performs transmission based on the uplink grant information. Therefore, data sent by the secondary terminal needs to be blindly detected on the time-frequency resource. As a result, receiving performance of the network device deteriorates, and processing complexity is increased. In addition, a similar problem also exists in a grant-free transmission scenario or the like. To be specific, the network device does not determine whether uplink data transmission of a terminal exists on a time-frequency resource. Therefore, the time-frequency resource may need to be blindly detected. As a result, the receiving performance of the network device deteriorates, and the processing complexity of the network device is increased.

### SUMMARY

This application provides a data transmission method and apparatus, to improve receiving performance of a network device and reduce processing complexity of the network device.

According to a first aspect, this application provides a data transmission method, to improve receiving performance of a network device and reduce processing complexity of the network device. The method may be implemented by a second terminal apparatus. For example, the second terminal apparatus is a terminal device (which may be referred to as a terminal device corresponding to the second terminal apparatus) or a component in the terminal device. The component in this application is, for example, at least one of a processor, a transceiver, a processing module, or a transceiver module. For example, an execution body is the second terminal apparatus. The method may be implemented by using the following steps: The second terminal apparatus receives first indication information from a first terminal apparatus, where the first indication information indicates that the first terminal apparatus requests to send data to the network device. The second terminal apparatus may further send second indication information to the network device, where the second indication information may indicate that the first terminal apparatus sends the data to the network device. Therefore, the network device may learn, based on the second indication information from the second terminal apparatus, that the first terminal apparatus is to send uplink data, to avoid blind detection performed by the network device due to uncertainty about whether there is uplink transmission of the first terminal apparatus, so that the receiving performance of the network device can be improved, and the processing complexity of the network device can be reduced.

In a possible design, the second terminal apparatus may further send response information of the first indication information to the first terminal apparatus, where the response information is used to acknowledge whether the first terminal apparatus can send the data to the network device.

Therefore, after receiving the response information, the first terminal apparatus may send the data to the network device, to improve transmission performance. For example, in uplink opportunistic transmission, the second terminal apparatus is a primary terminal, so that the primary terminal may indicate whether the first terminal apparatus can send data to the network device by using a time-frequency resource allocated by the network device to the primary terminal, to avoid interference caused by the uplink data of the first terminal apparatus to uplink data of the second terminal apparatus.

In a possible design, the second terminal apparatus may further receive second uplink grant information from the network device, and send first uplink grant information to the first terminal apparatus, where the first uplink grant information is determined based on the second uplink grant information, and the first indication information specifically indicates that the first terminal apparatus sends the data to the network device based on the first uplink grant information.

Therefore, in an uplink opportunistic transmission scenario, the first terminal apparatus that sends the first uplink grant information can receive the first indication information, and send the second indication information to the network device, to improve communication reliability.

In a possible design, a time-frequency resource corresponding to the second uplink grant information is the same as a time-frequency resource corresponding to the first uplink grant information.

In this design, the time-frequency resource corresponding to the first uplink grant information is the same as the time-frequency resource corresponding to the second uplink grant information. Therefore, the network device does not need to separately allocate a time-frequency resource to a terminal device corresponding to the first terminal apparatus, and a quantity of terminal devices that perform multiplexing transmission on a same time-frequency resource can be increased, thereby improving a multiplexing capability of a communication system.

In a possible design, the time-frequency resource corresponding to the second uplink grant information is used by the second terminal apparatus to send data and/or the second indication information to the network device, and the time-frequency resource corresponding to the first uplink grant information is used by the first terminal apparatus to send the data to the network device.

In this design, both the first terminal apparatus and the second terminal apparatus may perform uplink transmission by using the same time-frequency resource, to improving the multiplexing capability of the communication system. The uplink transmission of the second terminal apparatus includes sending of the uplink data and/or the second indication information.

In a possible design, the second uplink grant information includes indication information of a reference signal associated with at least one beam direction or a beam direction identifier, and the first uplink grant information includes the indication information of the reference signal associated with the at least one beam direction or the beam direction identifier. The indication information of the reference signal associated with the beam direction is, for example, the indication information of the reference signal associated with the beam direction.

In this design, the first uplink grant information and/or the second uplink grant information may explicitly indicate the beam direction, so that the first terminal apparatus can flexibly and accurately determine the beam direction.

In a possible design, the second indication information may further indicate a beam direction of the first terminal apparatus and/or a code domain resource used by the first terminal apparatus to send the data to the network device; or the second indication information may further indicate an identifier of the first terminal apparatus, and the identifier of the first terminal apparatus is used to determine a beam direction of the first terminal apparatus and/or a code domain resource used by the first terminal apparatus to send the data to the network device.

In this design, the second indication information may indicate the beam direction of the first terminal apparatus and/or the code domain resource, so that the first terminal apparatus may indicate the beam direction and/or the code domain resource to the network device by using the second terminal apparatus, to facilitate the network device to receive the data from the first network device based on the beam direction and/or the code domain resource.

In a possible design, the first indication information further indicates the beam direction of the first terminal apparatus and/or the code domain resource used by the first terminal apparatus to send the data to the network device; or the first indication information further indicates the identifier of the first terminal apparatus, and the identifier of the first terminal apparatus is used to determine the beam direction of the first terminal apparatus and/or the code domain resource used by the first terminal apparatus to send the data to the network device.

In this design, the first indication information may indicate the beam direction of the first terminal apparatus and/or the code domain resource, so that the first terminal apparatus may indicate the beam direction and/or the code domain resource to the network device by using the second terminal apparatus, to facilitate the network device to receive the data from the first network device based on the beam direction and/or the code domain resource.

In a possible design, the code domain resource includes a DMRS resource.

In a possible design, the DMRS resource includes at least one of the following: a DMRS port number and a sequence.

According to a second aspect, this application provides a data transmission method, to improve receiving performance of a network device and reduce processing complexity of the network device. The method may be implemented by a first terminal apparatus. For example, the first terminal apparatus is a terminal device (which may be referred to as a terminal device corresponding to the first terminal apparatus) or a component in the terminal device. The component in this application is, for example, at least one of a processor, a transceiver, a processing module, or a transceiver module. For example, an execution body is the first terminal apparatus. The method may be implemented by using the following steps: The first terminal apparatus sends first indication information to a second terminal apparatus, where the first indication information indicates that the first terminal apparatus requests to send data to the network device. The first terminal apparatus may further send the data to the network device. Therefore, the network device may learn, based on second indication information from the second terminal apparatus, that the first terminal apparatus is to send uplink data, to avoid blind detection performed by the network device due to uncertainty about whether there is uplink transmission of the first terminal apparatus, so that the receiving performance of the network device can be improved, and the processing complexity of the network device can be reduced.

In a possible design, the first terminal apparatus may further receive response information of the first indication information from the second terminal apparatus, where the response information is used to acknowledge whether the first terminal apparatus can send the data to the network device.

In a possible design, the first terminal apparatus may further receive first uplink grant information from the second terminal apparatus, where the first indication information specifically indicates that the first terminal apparatus sends the data to the network device based on the first uplink grant information.

In a possible design, the first indication information may further indicate a beam direction of the first terminal apparatus and/or a code domain resource used by the first terminal apparatus to send the data to the network device; or the first indication information may further indicate an identifier of the first terminal apparatus, and the identifier of the first terminal apparatus is used to determine a code domain resource used by the first terminal apparatus to send the data to the network device.

In a possible design, the code domain resource includes a demodulation reference signal DMRS resource.

In a possible design, the DMRS resource includes at least one of the following: a DMRS port number and a sequence.

According to a third aspect, this application provides a data transmission method, to increase a quantity of terminal devices that perform multiplexing transmission on a same time-frequency resource. The method may be implemented by a network device or a component in the network device. The component in this application is, for example, at least one of a processor, a transceiver, a processing module, or a transceiver module. For example, an execution body is the network device. The method may be implemented by using the following steps: The network device receives second indication information from a second terminal apparatus, where the second indication information indicates that a first terminal apparatus sends data to the network device. The network device may further receive the data from the first terminal apparatus. Therefore, the network device may learn, based on the second indication information from the second terminal apparatus, that the first terminal apparatus is to send uplink data, to avoid blind detection performed by the network device due to uncertainty about whether there is uplink transmission of the first terminal apparatus, so that receiving performance of the network device can be improved, and processing complexity of the network device can be reduced.

In a possible design, the network device may further send second uplink grant information to the second terminal apparatus, where the second uplink grant information includes indication information of a reference signal associated with at least one beam direction or a beam direction identifier.

In a possible design, a time-frequency resource corresponding to the second uplink grant information is used by the second terminal apparatus to send data and/or the second indication information to the network device, and a time-frequency resource corresponding to first uplink grant information is used by the first terminal apparatus to send the data to the network device.

In a possible design, the time-frequency resource corresponding to the second uplink grant information is the same as the time-frequency resource corresponding to the first uplink grant information.

In a possible design, the second indication information may further indicate a beam direction of the first terminal apparatus and/or a code domain resource used by the first terminal apparatus to send the data to the network device; or the second indication information may further indicate an identifier of the first terminal apparatus, and the identifier of the first terminal apparatus is used to determine a beam direction of the first terminal apparatus and/or a code domain resource used by the first terminal apparatus to send the data to the network device. The network device may further receive the data from the first terminal apparatus based on the beam direction of the first terminal apparatus and/or the code domain resource.

In a possible design, the code domain resource includes a demodulation reference signal DMRS resource.

In a possible design, the DMRS resource includes at least one of the following: a DMRS port number and a sequence.

According to a fourth aspect, a data transmission apparatus is provided. The apparatus may implement the method according to any possible design of the first aspect. The apparatus has a function of the first terminal apparatus. The apparatus is, for example, a terminal device corresponding to the first terminal apparatus, or a function module in the terminal device.

Alternatively, the apparatus may implement the method according to the second aspect and any possible design of the second aspect. The apparatus has a function of the second terminal apparatus. The apparatus is, for example, a terminal device corresponding to the second terminal apparatus, or a function module in the terminal device.

Alternatively, the apparatus may implement the method according to the third aspect and any possible design of the third aspect. The apparatus has a function of the network device. The apparatus is, for example, the network device, or a function module in the network device.

In an optional implementation, the apparatus may include modules that are in one-to-one correspondence with the methods/operations/steps/actions described in the first aspect, the second aspect, or the third aspect. The modules may be hardware circuits or software, or may be implemented by a combination of the hardware circuits and the software. In an optional implementation, the apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same function module, the function module is referred to as a transceiver unit, and the function module can implement the sending function and the receiving function. Alternatively, the sending unit and the receiving unit may be different function modules, and the transceiver unit is a general term for the function modules. Optionally, the processing module may be configured to generate information, a message, or signaling that needs to be sent by the transceiver module. The processing module may be further configured to process information, a message, or signaling received by the transceiver module, for example, parse, descramble, or decode the information, the message, or the signaling.

For example, when the apparatus is configured to perform the method described in the first aspect, the apparatus may include a transceiver module and a processing module. The transceiver module may be configured to receive first indication information from the first terminal apparatus, and may be further configured to send second indication information to the network device. For the first indication information and the second indication information, refer to the descriptions in the first aspect.

Optionally, the transceiver module may be further configured to send response information of the first indication information to the first terminal apparatus. For the response information, refer to the descriptions in the first aspect.

Optionally, the transceiver module may be further configured to: receive second uplink grant information from the network device, and send first uplink grant information to the first terminal apparatus. For the first uplink grant information and/or the second uplink grant information, refer to the descriptions in the first aspect.

For example, when the apparatus is configured to perform the method described in the second aspect, the apparatus may include a transceiver module and a processing module. The transceiver module may be configured to send first indication information to the second terminal apparatus, and may be further configured to send data to the network device. For the first indication information, refer to the descriptions in the second aspect.

Optionally, the transceiver module may be further configured to receive response information of the first indication information from the second terminal apparatus. For the response information, refer to the descriptions in the second aspect.

Optionally, the transceiver module may be further configured to receive first uplink grant information from the second terminal apparatus. For the first uplink grant information, refer to the descriptions in the second aspect.

For example, when the apparatus is configured to perform the method described in the third aspect, the apparatus may include a transceiver module and a processing module. The transceiver module may be configured to receive second indication information from the second terminal apparatus, and may further receive data from the first terminal apparatus; or the processing module may be configured to obtain the second indication information. For the second indication information, refer to the descriptions in the third aspect. Optionally, the processing module may be configured to determine, based on the second indication information, to receive the data from the first terminal apparatus.

Optionally, the transceiver module may be further configured to send second uplink grant information to the second terminal apparatus. For the second uplink grant information, refer to the descriptions in the third aspect.

According to a fifth aspect, a computer-readable storage medium is provided. The computer-readable storage medium is configured to store a computer program or instructions, and when the computer-readable storage medium is run, the method in any one of the first aspect to the third aspect is implemented.

According to a sixth aspect, a computer program product including instructions is provided. When the computer program product runs on a computer, the method in any one of the first aspect to the third aspect is implemented.

According to a seventh aspect, a chip system is provided. The chip system includes a logic circuit (which may alternatively be understood as that the chip system includes a processor, and the processor may include a logic circuit and the like), and may further include an input/output interface. The input/output interface may be configured to receive a message, or may be configured to send a message. For example, when the chip system is configured to implement a function of the first terminal apparatus, the input/output interface may be configured to receive first uplink grant information. The input/output interface may be a same interface, that is, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than a receiving/sending function in the first aspect to the third aspect. The logic circuit may be further configured to transmit a message to the input/output interface, or receive a message from another communication apparatus through the input/output interface. The chip system may be configured to implement the method in any one of the first aspect to the third aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to an eighth aspect, a communication system is provided. The communication system may include a first terminal apparatus and a network device. The first terminal apparatus may be configured to perform the method according to the first aspect, and the network device may be configured to perform the method according to the third aspect.

Optionally, the communication system may further include a second terminal apparatus, and the second terminal apparatus may be configured to perform the method according to the second aspect.

For technical effects brought by the second aspect to the eighth aspect, refer to the descriptions of the first aspect. Details are not described herein again.

### BRIEF DESCRIPTION OF DRAWINGS

FIG. 1 is a diagram of an architecture of a wireless communication system according to this application;
FIG. 2a is a diagram of an architecture of a protocol stack of a wireless communication system;
FIG. 2b is a diagram of an architecture of a protocol stack of another wireless communication system;
FIG. 3 is a schematic flowchart of RRC state switching;
FIG. 4 is a schematic flowchart of a random access method;
FIG. 5 is a schematic flowchart of another random access method;
FIG. 6 is a diagram of a relationship between a beam and a spatial direction according to this application;
FIG. 7 is a diagram of a relationship between a beam and a transmission resource according to this application;
FIG. 8 is a schematic flowchart of a communication method according to this application;
FIG. 9 is a diagram of a structure of another communication apparatus according to this application;
FIG. 10 is a diagram of a structure of another communication apparatus according to this application;
FIG. 11 is a diagram of a structure of another communication apparatus according to this application;
FIG. 12 is a diagram of a structure of another communication apparatus according to this application;
FIG. 13 is a diagram of a structure of another communication apparatus according to this application;
FIG. 14 is a diagram of a structure of another communication apparatus according to this application;
FIG. 15 is a diagram of a structure of a communication apparatus according to this application;
FIG. 16 is a diagram of a structure of another communication apparatus according to this application; and
FIG. 17 is a diagram of a structure of another communication apparatus according to this application.

### DESCRIPTION OF EMBODIMENTS

Embodiments of this application provide a data transmission method and apparatus. The method and the apparatus are based on a same inventive concept. Because problem-resolving principles of the method and the apparatus are similar, mutual reference may be made to implementations of the apparatus and the method, and repeated parts are not described. In descriptions of embodiments of this application, the term "and/or" describes an association relationship between associated objects, and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In addition, it should be understood that in the descriptions of this application, terms such as "first" and "second" are merely used for distinguishing and description, but should not be understood as indicating or implying relative importance, or should not be understood as indicating or implying a sequence.

The data transmission method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or applied to various future communication systems, for example, a 6th generation (6th generation, 6G) communication system. The method provided in embodiments of this application may be further applied to a Bluetooth system, a Wi-Fi system, a LoRa system, or an internet of vehicles system. The method provided in embodiments of this application may be further applied to a satellite communication system. The satellite communication system may be integrated with the foregoing communication system.

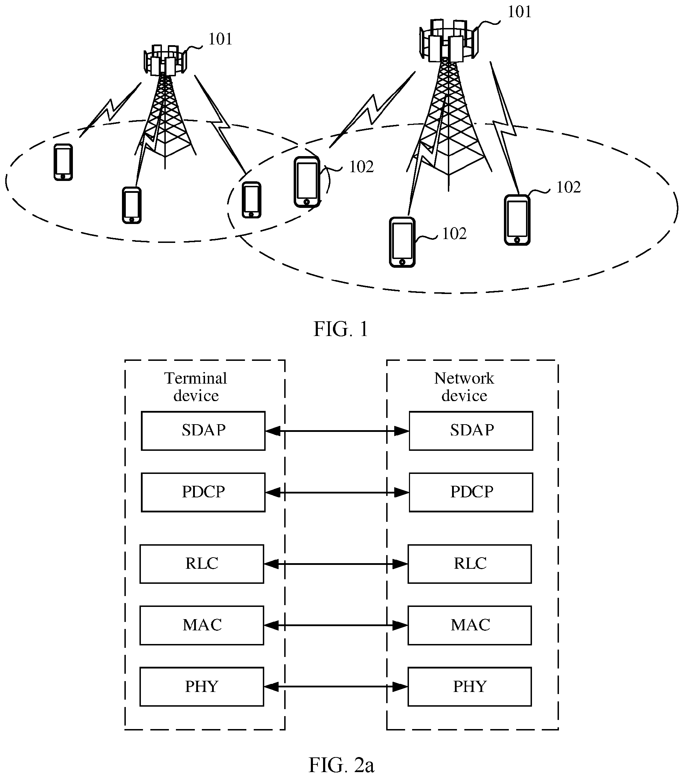

For ease of understanding of embodiments of this application, an application scenario used in this application is described by using a communication system architecture shown in FIG. 1 as an example. As shown in FIG. 1, a communication system 100 includes a network device 101 and a terminal device 102. The apparatus provided in embodiments of this application may be used in the network device 101 or the terminal device 102. It may be understood that FIG. 1 shows only one possible communication system architecture to which embodiments of this application may be applied. In another possible scenario, the communication system architecture may alternatively include another device.

The network device 101 is a node in a radio access network (radio access network, RAN), and may also be referred to as a base station or a RAN node (or device). Currently, some examples of the network device 101 are: a gNB/NR-NB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), a satellite device, a network device in a 5G communication system, and a network device in a possible communication system in the future. Alternatively, the network device 101 may be another device that has a network device function. For example, the network device 101 may alternatively be a device that functions as a network device in device to device (device to device, D2D) communication, internet of vehicles communication, or machine-to-machine communication. Alternatively, the network device 101 may be a network device in a possible future communication system.

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device 102 may also be referred to as user equipment (user equipment, UE), a mobile station (mobile station, MS), a mobile terminal (mobile terminal, MT), or the like, and is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a laptop computer, a palmtop computer, a mobile internet device (mobile internet device, MID), a wearable device (for example, a smartwatch, a smart band, or a pedometer), a vehicle-mounted device (for example, a car, a bicycle, an electric car, an airplane, a ship, a train, or a high-speed rail), a virtual reality (virtual reality, VR) device, an augmented reality (augmented reality, AR) device, a wireless terminal in industrial control, a smart household device (for example, a refrigerator, a television, an air conditioner, or a meter), an intelligent robot, workshop equipment, a wireless terminal in self driving, a wireless terminal in remote surgery, a wireless terminal in a smart grid (smart grid), a wireless terminal in transportation safety, a wireless terminal in a smart city, a wireless terminal in a smart home, a flight device (for example, an intelligent robot, a hot air balloon, an uncrewed aerial vehicle, or an airplane), or the like. The terminal device may alternatively be another device having a terminal function. For example, the terminal device may alternatively be a device that functions as a terminal in D2D communication. A terminal device that has a wireless receiving/sending function and a chip that may be disposed in the terminal device are collectively referred to as the terminal device in this application.

With reference to the communication system shown in FIG. 1, the following describes in detail the data transmission method provided in embodiments of this application.

To better understand solutions provided in embodiments of this application, the following first describes some terms, concepts, or procedures in embodiments of this application.

First, a status of the terminal device is described.

As shown in FIG. 2a, a user plane protocol stack for communication between the terminal device and the network device includes a service data adaptation (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer.

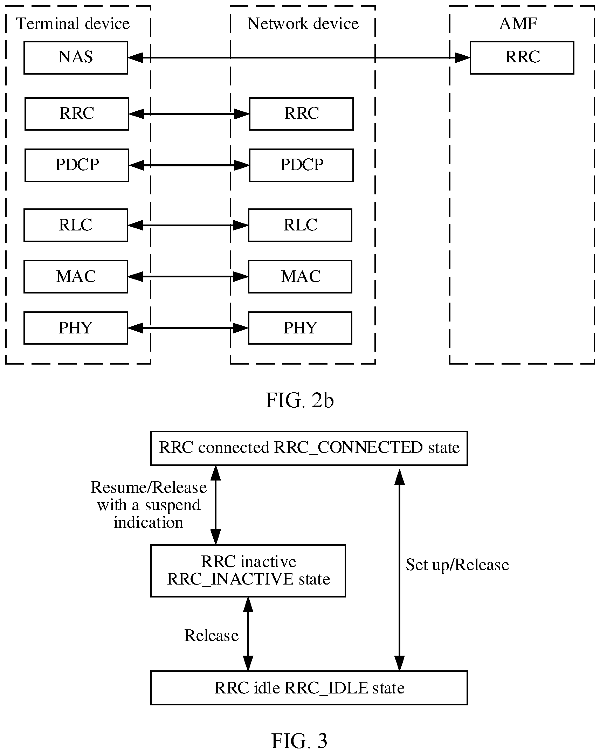

As shown in FIG. 2b, a control plane protocol stack for communication between the terminal device and the network device includes a non-access stratum (non-access stratum, NAS), a radio resource control (radio resource control, RRC) layer, a PDCP layer, an RLC layer, a MAC layer, and a PHY layer.

For the RRC layer, there are several RRC states of the terminal device: an RRC idle (RRC_IDLE) state, an RRC inactive (RRC_INACTIVE) state, and an RRC connected (RRC_CONNECTED) state. When the terminal device has set up an RRC connection, the terminal device is in the RRC_CONNECTED state or the RRC_INACTIVE state. If the terminal device does not set up an RRC connection, the terminal device is in the RRC_IDLE state. The RRC_INACTIVE state is a state introduced for the terminal device in the 5G NR communication system. The RRC_INACTIVE state is mainly for a case in which "a terminal device that performs infrequent (infrequent) data transmission is usually kept in the RRC_INACTIVE state by a network".

The terminal device performs different operations in different RRC states. A process of switching among the three states is shown in FIG. 3. The terminal device is initially in the RRC_IDLE state. When the terminal device needs to perform data transmission, the terminal device performs a random access process to set up (set up) an RRC connection to the network device, and enters the RRC_CONNECTED state. After entering the RRC_CONNECTED state, the terminal device starts to perform data transmission. To set up the RRC connection, the terminal device sends a connection setup request message, for example, RRCSetupRequest, to the network device in a process of initiating random access, and receives a connection setup message, for example, an RRCSetup message, sent by the network device.

When the terminal device does not need to perform data transmission subsequently, the network device may release the terminal device, so that the terminal device enters the RRC_IDLE state or the RRC_INACTIVE state. For example, the network device sends a release (release) message with a suspend indication, for example, RRCRelease with suspend indication, so that the terminal device enters the RRC_INACTIVE state. Alternatively, the network device sends a release message, for example, an RRCRelease message, so that the terminal device enters the RRC_IDLE state.

In addition, the terminal device in the RRC_INACTIVE state may further return to the RRC_CONNECTED state by using a resume (resume) message. For example, the terminal device sends an RRC resume request (RRCResumeRequest), receives an RRC resume (RRCResume) message, and returns to the RRC_CONNECTED state. Similarly, the network device may further release the terminal device, so that the terminal device enters the RRC_IDLE state.

For brief description, the RRC_IDLE state may also be briefly described as an idle state or an IDLE state; the RRC_INACTIVE state may also be briefly described as an inactive state or an INACTIVE state; and the RRC_CONNECTED state may also be briefly described as a connected state, an active state, or a CONNECTED state.

In conclusion, the several RRC states (which may also be referred to as states for short) of the terminal device have been described. Embodiments of this application may be used by the terminal device in the RRC connected state, the RRC idle state, or the RRC inactive state to implement uplink data transmission, or may be used by a terminal device in a state other than the RRC connected state, the RRC idle state, and the RRC inactive state, for example, a terminal device that is not attached to a network or that does not perform downlink synchronization with the network, to implement uplink data transmission. This is not specifically required.

In this application, the terminal device may send uplink data to the network device.

An uplink data transmission manner is uplink transmission based on a dynamic grant (dynamic grant, DG) (or referred to as a dynamic uplink grant (dynamic UL grant)). In this manner, when the terminal needs to send user plane data to a base station, the terminal may monitor downlink control information (downlink control information, DCI) delivered by the base station through a physical downlink control channel (physical downlink control channel, PDCCH). The DCI includes an uplink grant (uplink grant, UL grant). The uplink grant may be used to authorize the terminal to send the uplink data on a specified time-frequency resource by using a specified parameter, for example, a specified modulation and coding scheme (modulation and coding scheme, MCS). Before monitoring the DCI, the terminal may first send a scheduling request (scheduling request, SR) to the base station through a physical uplink control channel (physical uplink control channel, PUCCH) or report a buffer state (buffer state, BS) to the base station through a physical uplink shared channel (physical uplink shared channel, PUSCH), to notify the base station of an uplink sending requirement or the buffer state. This helps the base station perform the uplink grant and resource scheduling based on the requirement.

It may be understood that the uplink data transmission manner provided in embodiments of this application may further include data transmission in a random access (random access, RA) process or grant-free (grant-free, GF) data transmission. The data transmission in the RA process and the GF data transmission may be applied to a small data transmission (small data transmission, SDT) scenario. The following describes the two uplink data transmission manners with reference to small data transmission.

Currently, the 3rd generation partnership project (3rd generation partnership project, 3GPP) supports the UE in the RRC idle state or the RRC inactive state in transmitting data, for example, small data. A corresponding transmission process may be referred to as the small data transmission. In the small data transmission scenario, a data amount of a data packet that the UE needs to transmit is usually very small, and a data amount of signaling needed for the UE to enter the RRC connected state from the RRC idle state or the RRC inactive state is even greater than the data amount in the small data transmission. If the UE in the RRC idle state or the RRC inactive state is required to enter the connected state before sending the small data, unnecessary power consumption and signaling overheads are caused. Therefore, the terminal is supported in directly transmitting the small data in the RRC idle state or the RRC inactive state, instead of transmitting the small data after entering the RRC connected state, so that signaling overheads and power consumption can be significantly reduced. For example, the small data transmission is an instant message of an instant messaging application (application, APP), heartbeat packets or push messages of various APPs, service data of a non-smartphone, for example, accuracy data (such as a heartbeat packet) of a wearable device, periodic read data sent by an industrial wireless sensor network, or data of a device such as a smart meter.

Currently, small data transmission of the UE in the RRC idle state or the RRC inactive state may be usually implemented by using the data transmission in the RA process and the GF data transmission. The two transmission manners respectively correspond to the following Manner 1 and Manner 2.

Manner 1: The small data transmission is implemented in RA, and a small data transmission process may be referred to as random access small data transmission (RA SDT). The RA small data transmission means that the terminal device sends the uplink data to the network device or receives downlink data in the RA process. For ease of description, all data in the following may be understood as the uplink data or the downlink data. In addition, the uplink data in this application may also be replaced with the downlink data. For example, "sending the uplink data" and "receiving the downlink data" may be replaced with each other, and "sending the downlink data" and "receiving the uplink data" may be replaced with each other.

It may be understood that the RA may include 4-step RA (4-step RA) and 2-step RA (2-step RA).

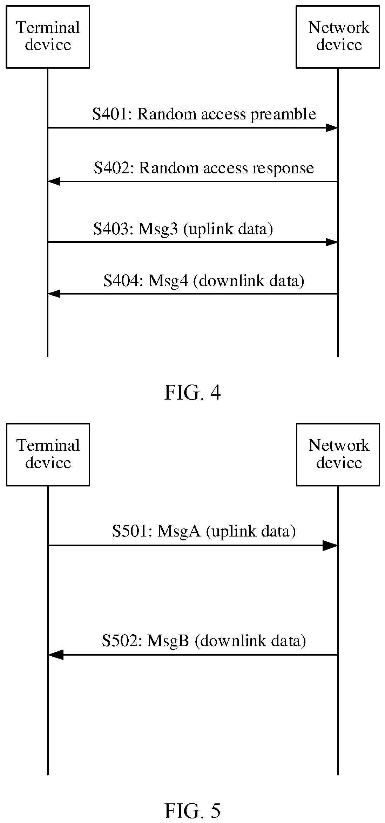

FIG. 4 shows an example of a small data transmission process in the 4-step RA.

S401: The terminal device sends a message 1 (Msg1) to the network device, and the network device receives the message 1 from the terminal device, where the message 1 is a random access preamble (random access preamble) (which may be referred to as a preamble for short below), and the preamble is used by the network device to estimate a timing advance (timing advance, TA) of the terminal device.

S402: The network device sends a message 2 (Msg2) to the terminal device, and the terminal device receives the message 2 from the network device.

The message 2 is a random access response (random access response).

S403: The terminal device sends a message 3 (Msg3) to the network device, and the network device receives the message 3 from the terminal device.

The Msg3 may carry the uplink data, for example, the small data.

S404: The network device sends a message 4 (Msg4) to the terminal device, and the terminal device receives the message 4 from the network device.

Optionally, the Msg4 carries the downlink data.

FIG. 5 shows an example of a small data transmission process in the 2-step RA.

S501: The terminal device sends a message A (MsgA) to the network device, and the network device receives the message A from the terminal device.

The MsgA may carry the uplink data, for example, the small data.

A transmission channel of the MsgA may include a physical random access channel (physical random access channel, PRACH) and a physical uplink shared channel (physical uplink shared channel, PUSCH). The PRACH is used to send a preamble, used by the network device to estimate a timing advance of the terminal device, so that the terminal device implements uplink synchronization with the network device. The terminal device may further send the uplink data (for example, the small data) through the PUSCH of the MsgA. In other words, the PUSCH may be configured to carry the uplink data.

S502: The network device returns a message B (MsgB) to the terminal, and the terminal device receives the message B from the network device.

The downlink data may be carried in the MsgB. Early transmitted downlink data may be transmitted through a physical downlink shared channel PDSCH of the MsgB.

Manner 2: GF small data transmission. A GF small data transmission process is described as follows.

The network device pre-configures, for the terminal device in a semi-static manner, a PUSCH resource and a transmission parameter that are used for uplink data transmission. When needing to send the uplink data, the terminal device directly sends the data to the network device by using the pre-configured PUSCH resource and parameter, and does not need to receive a dynamic uplink grant from the network device or send a preamble to perform random access.

Both transmission based on a pre-configured uplink resource (pre-configured uplink resource, PUR) in LTE and transmission based on a configured grant (configured grant, CG) in NR belong to an uplink grant-free transmission category. The CG includes a first type (Type 1) CG and a second type (Type 2) CG. The transmission based on the PUR is similar to transmission based on the Type 1 CG. The network device configures a resource and a transmission parameter for the terminal device by using RRC signaling, for example, configures one or more of the following parameters: a periodicity of time domain resources, a parameter related to open-loop power control, a waveform, a redundancy version sequence, a quantity of repetition times, a frequency hopping mode, a resource allocation type, a quantity of hybrid automatic repeat request (hybrid automatic repeat request, HARQ) processes, a parameter related to a demodulation reference signal (demodulation reference signal, DMRS), a modulation and coding scheme (modulation and coding scheme, MCS) table, a resource block group (resource block group, RBG) size, a time domain resource, a frequency domain resource, an MCS, and the like.

In transmission based on the Type 2 CG, the network device uses a 2-step resource configuration manner. First, the network device delivers configured grant configuration information by using RRC signaling, where the configuration information is used to configure one or more of the following transmission resources and transmission parameters: a periodicity of a time domain resource, a parameter related to open-loop power control, a waveform, a redundancy version sequence, a quantity of repetition times, a frequency hopping mode, a resource allocation type, a quantity of HARQ processes, a parameter related to a demodulation reference signal, an MCS table, and an RBG group size. Then, PUSCH transmission of the Type 2 CG is activated by using downlink control information (downlink control information, DCI) scrambled by using a configured scheduling radio network temporary identifier (configured scheduling radio network temporary identifier, CS-RNTI), and another transmission resource and another transmission parameter that include the time domain resource, the frequency domain resource, the DMRS, the MCS, and the like are configured.

A grant-free transmission technology may be applied to uplink transmission of the terminal in the RRC active state. For example, CG transmission (such as the Type 1 CG and the Type 2 CG) configured in 5G NR may be applied to the uplink transmission of the terminal in the RRC active state. In addition, the grant-free transmission technology may also be applied to uplink transmission of the terminal in the RRC idle state or the RRC inactive state. For example, PUR transmission may be applied to uplink transmission of the terminal in the idle state in LTE. For another example, Type 1 CG transmission may be applied to uplink transmission of the terminal in the RRC inactive state in 5G NR.

In grant-free small data transmission, the terminal device does not need to send the preamble. Therefore, the grant-free small data transmission is more applicable to a scenario in which the terminal device is synchronized with the network device. Compared with an RA-based solution, this solution can further reduce signaling overheads and power consumption of the terminal device.

In addition, a synchronization signal/physical broadcast channel block (synchronization signal/physical broadcast channel block, SS/PBCH block) is further introduced in 5G NR. In this application, the SS/PBCH block may also be referred to as a synchronization signal block (synchronization signal block, SSB). The SSB may include three parts: a primary synchronization signal (primary synchronization signal, PSS), a secondary synchronization signal (secondary synchronization signal, SSS), and a master information block (master information block, MIB).

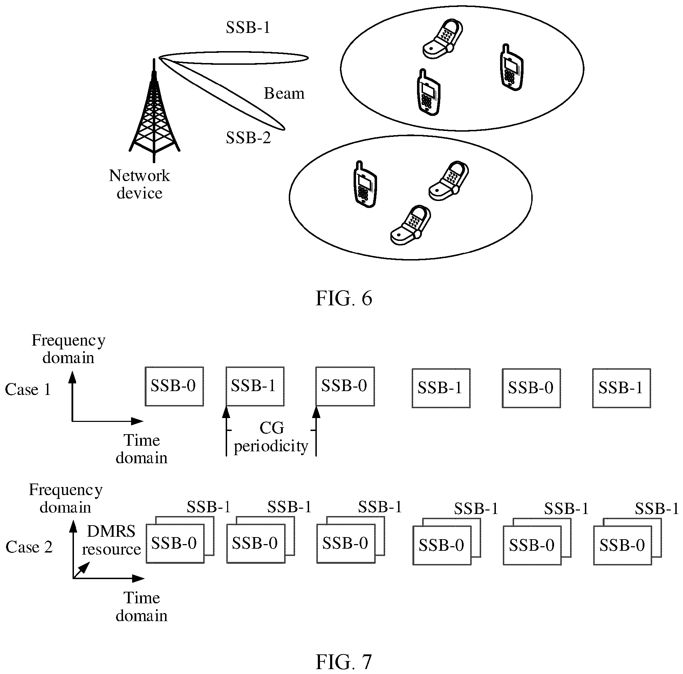

The network device sends a plurality of SSBs in a scanning manner in one periodicity, and different SSBs correspond to different spatial directions (for example, correspond to different beams). Therefore, a beam indication may also be implemented by using the SSB, or the SSB may be used as beam information. For example, as shown in FIG. 6, an SSB-1 and an SSB-2 respectively cover different areas, and the different areas may include different terminal devices. A quantity of SSBs may be configured by the network device for the terminal device by using a system message. Three quantities of SSBs: 4, 8, and 64 are supported in NR. Generally, a higher frequency indicates a larger quantity of SSBs and narrower beams for sending the SSBs.

The terminal device may measure a reference signal received power (reference signal received power, RSRP) of an SSB sent by the network device. When an RSRP measurement result of an SSB is greater than or equal to a preset threshold, the terminal device may select an access channel occasion (RACH occasion, RO) or a preamble to which the SSB is mapped, to perform an RA process, where one PRACH time-frequency resource may be referred to as one physical random access channel occasion. Therefore, there is a mapping relationship between an SSB and an RO or a preamble, and the mapping relationship may be one-to-many, one-to-one, or many-to-one. When performing 2-step RA or 4-step RA, the terminal may notify the base station of the selected SSB in an implicit manner by using the selected RO or preamble. In this way, when sending a response message (the MsgB or the Msg2), the base station may send the response message in a spatial direction that is the same as that of the SSB to which the RO or the preamble selected by the terminal is mapped. When receiving the response message, the terminal also assumes that a quasi co-location (quasi co-location, QCL) feature is the same as that of the SSB to which the selected RO or preamble is mapped, so that the terminal can implicitly indicate the SSB to the network device. The QCL feature may also be referred to as a QCL relationship. The QCL relationship means that two reference signals have some same spatial parameters. The SSB is implicitly indicated through RA, so that the base station can preliminarily determine a location of the terminal, to perform more accurate beam management. The terminal measures an SSB sent by the base station. When a measurement result of an SSB exceeds a preset threshold, the terminal may select an RO or a preamble to which the SSB is mapped, to perform the RA process. Similar to RA, there may also be a mapping relationship between an SSB and a grant-free transmission resource in GF transmission. For example, there is a mapping relationship between an SSB and a time-frequency resource (transmission occasion, TO) or a DMRS. The relationship may also be one-to-many, one-to-one, or many-to-one.

Based on the foregoing descriptions of the small data transmission and the descriptions of an SSB configuration manner, in current GF transmission, the base station configures, for the terminal by using a terminal-specific RRC message, a grant-free resource used for direct small data transmission in an inactive state, and the grant-free resource includes a periodic time-frequency resource, a DMRS resource, and a transmission parameter such as an MCS. When the terminal has an uplink data packet transmission requirement, the terminal sends data by using the configured time-frequency resource. When the time-frequency resource is shared by a plurality of terminals, the base station may distinguish between the terminals by using DMRS resources such as DMRS ports or DMRS sequences. For example, different terminals use different DMRS ports or sequences.

In addition, when configuring the time-frequency resource and the DMRS resource for the terminal, the base station associates the configured resource with a beam such as an SSB. In this way, the terminal side selects, based on a beam measurement result, a time-frequency resource or a DMRS resource associated with a beam to send data, to implement a beam indication, and the base station side receives, on the associated time-frequency resource by using a beam direction and by using the associated DMRS, the data sent by the terminal. For example, a method for associating the beam manner with the grant-free time-frequency resource and the DMRS resource is as follows: N (N≥1) SSBs are mapped to a plurality of combinations of time-frequency resources and DMRSs in a sequence of the DMRS resource (port or sequence) and then the time-frequency resource. For example, when N=2, two different SSBs may be mapped to different time-frequency resources (as shown in a case 1 in FIG. 7) or different DMRS resources on a same time-frequency resource (as shown in a case 2 in FIG. 7).

To consider transmission of all terminals whose service types support GF transmission in a cell, the base station needs to configure a corresponding SSB for each terminal. However, because the terminals may be completely scattered in the cell, it means that the base station needs to configure associated time-frequency resources and DMRS resources for all or most beam directions (such as SSBs). As a result, time-frequency resources mapped to a same beam direction have a large time interval. Consequently, a quantity of terminal devices that perform multiplexing transmission within specific time is limited, and it is difficult to meet a terminal multiplexing transmission requirement brought by an increasing quantity of terminals. In addition, in a highfrequency scenario, a beam is narrower, and there are more beam directions. In addition, due to a limited quantity of receive and transmit channels, the base station can simultaneously serve a limited quantity of beam directions, and a quantity of terminal devices that can perform multiplexing transmission is further limited.

In addition, to improve a multiplexing transmission capability for uplink data transmission, a terminal device may further send uplink data to a network device by using a data transmission method based on opportunistic multiple access (opportunistic multiple access, OpMA) or a data transmission method based on affiliated multiple access (affiliated multiple access, AMA). The method may also be referred to as opportunity-based multiple access (opportunity-based multiple access, OBMA) transmission. In uplink opportunistic transmission, the terminal may determine a beam direction based on received uplink grant information, and when the beam direction meets a preset condition, the terminal sends the uplink data to the network device by using a time-frequency resource corresponding to the uplink grant information. The time-frequency resource corresponding to the uplink grant information is used by a primary terminal to send the uplink data. In other words, the time-frequency resource is allocated to the primary terminal.

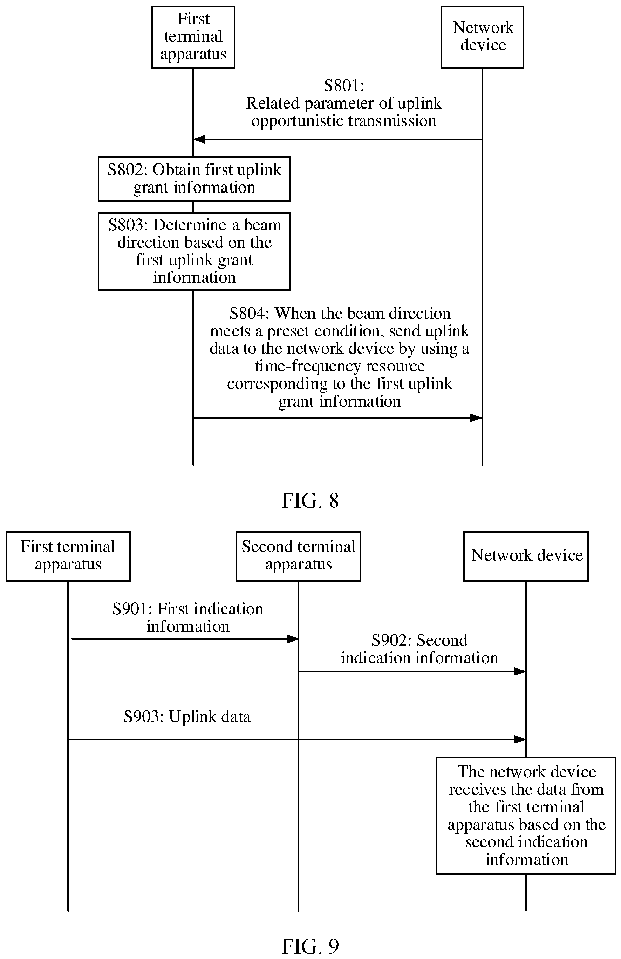

In the following, an example in which a first terminal apparatus, a second terminal apparatus, and the network device are execution bodies is used for description. The first terminal apparatus may be a first terminal device or a component in the first terminal device, and the second terminal apparatus may be a second terminal device or a component in the second terminal device. Optionally, the first terminal device and the second terminal device are different terminal devices. For example, optionally, the first terminal device and the second terminal device are different terminals in a coverage area of a same beam. In this application, the second terminal device may be used as a primary terminal (or a primary terminal), in other words, a time-frequency resource corresponding to first uplink grant information is originally allocated by the network device to the second terminal device. The first terminal device may be used as a secondary terminal in this application. In some conditions, the secondary terminal in this application may perform uplink data transmission by using the time-frequency resource allocated by the network device to the primary terminal. Alternatively, both the first terminal device and the second terminal device are used as secondary terminals, or the second terminal device is one or more secondary terminals including the first terminal device. In this case, there may be no primary terminal, in other words, there is no need to distinguish between the primary terminal and the secondary terminal. The following describes a procedure of the method with reference to FIG. 8.

As shown in FIG. 8, an uplink opportunistic transmission method may include the following steps.

S801: The network device configures a related parameter of uplink opportunistic transmission for the first terminal apparatus, where the parameter is used by the first terminal apparatus to perform uplink transmission.

For example, in S801, the network device may configure at least one of a beam direction, a terminal type, a transmission resource, and a transmission parameter for the first terminal apparatus and/or the second terminal apparatus. For example, the network device sends configuration information to the first terminal apparatus or the second terminal apparatus by using signaling such as an RRC message, a MAC CE, or DCI, to configure an uplink transmission mode that is based on opportunistic multiple access and/or a related parameter. The related parameter includes but is not limited to a terminal identifier, a beam direction, a transmission resource used to send data, a transmission parameter, and a parameter used to receive an uplink grant, for example, a radio network temporary identifier (radio network temporary identifier, RNTI), a control-resource set (control-resource set, CORESET), search space (search space, SS), or a signaling format (format). Details are described with reference to the following.

This step is optional. For example, the related parameter of uplink opportunistic transmission may alternatively be pre-configured or predefined.

S802: The first terminal apparatus further obtains the first uplink grant information.

In a first implementation of S802, the first uplink grant information is from the network device, or the first uplink grant information is sent by the network device to the first terminal apparatus, and is used to schedule uplink data transmission of the second terminal apparatus.

For example, the first uplink grant information may be a physical layer signal. For example, the first uplink grant information is DCI, and the first uplink grant information may be sent through a PDCCH. For another example, the first uplink grant information may alternatively be a MAC layer signal, for example, a MAC control element (control element, CE). In this case, the first uplink grant information may be delivered through, for example, a PDSCH. A difference between the DCI and the MAC control element lies in that the DCI is usually scrambled by using a specific RNTI before being sent. Therefore, the terminal can correctly receive the DCI sent by a base station to the terminal only after determining the RNTI. However, the MAC CE does not need to be scrambled by using a specific RNTI before being received.

If the first uplink grant information is the DCI, an RNTI used by the first terminal apparatus to receive the first uplink grant information may be pre-configured by the network device by using signaling. For example, the network device may configure the RNTI for the first terminal apparatus by using an RRC message, a MAC CE, or DCI.

The first uplink grant information may indicate a time-frequency resource (or referred to as a time-frequency resource corresponding to the first uplink grant information), and the time-frequency resource may be used by the second terminal apparatus to send uplink data.

It should be understood that the first uplink grant information is sent by the network device to the second terminal for scheduling uplink data transmission of the second terminal, but the first terminal apparatus may also obtain the first uplink grant information. For example, in S801, the parameter configured by the network device for the first terminal apparatus includes a parameter used by the first terminal apparatus to receive the first uplink grant information. For example, in S801, the related parameter may include at least one parameter of the RNTI, a CORESET, search space, or a signaling format used to receive the first uplink grant information, and the first terminal apparatus may perform blind detection on the PDCCH to receive the first uplink grant information carried in the DCI.

The time-frequency resource corresponding to the first uplink grant information is used for uplink transmission of the second terminal apparatus. In other words, the first uplink grant information may be used by the second terminal apparatus to send the uplink data on the corresponding time-frequency resource by using a specified parameter (for example, an MCS) and the like. In other words, the time-frequency resource corresponding to the first uplink grant information may be a time-frequency resource allocated by the network device to the primary terminal (for example, the second terminal apparatus). When having an uplink data transmission requirement, the secondary terminal (for example, the first terminal apparatus) performs data transmission by using a time-frequency resource allocated by the base station to the primary terminal (for example, the second terminal apparatus), to be specific, performs opportunistic (opportunistic) transmission or affiliated (affiliated) transmission. Alternatively, both the first terminal apparatus and the second terminal apparatus are used as secondary terminals. Therefore, the time-frequency resource corresponding to the first uplink grant information may be a resource allocated by the network device to a group (or at least one) of secondary terminals.

In this application, the time-frequency resource corresponding to the first uplink grant information may be a time-frequency resource indicated by the first uplink grant information. The time-frequency resource may be further used by the first terminal apparatus to send uplink data.

For another example, in a second implementation of S802, after receiving the first uplink grant information from the network device, the second terminal apparatus may send the first uplink grant information to the first terminal apparatus. Alternatively, the second terminal apparatus may receive second uplink grant information sent by the network device, and send the first uplink grant information to the first terminal apparatus based on the uplink grant information, to indicate that the first terminal performs uplink data transmission based on the first uplink grant information. The first uplink grant information may be determined based on the second uplink grant information. The first uplink grant information may be the same as the second uplink grant information from the network device, or may be different from the second uplink grant information. For example, the first uplink grant information is a new message or information indicating a time-frequency resource, an uplink transmission parameter, and beam information. In this case, the second uplink grant information and/or the first uplink grant information may include at least one of information such as indication information of a reference signal associated with the beam direction, indication information of the transmission resource, and indication information of the transmission parameter.

The following describes a manner in which the first terminal apparatus determines, based on the first uplink grant information, a time-frequency resource used to send uplink data.

In an example, the first uplink grant information may include time-frequency resource information of the time-frequency resource. In other words, the time-frequency resource corresponding to the first uplink grant information is indicated by the time-frequency resource information included in the first uplink grant information. For example, the first uplink grant information includes time domain location information and frequency domain location information of the time-frequency resource.

In another example, the network device may configure a transmission resource set for the terminal by using an RRC message, a MAC CE, or DCI. The first uplink grant information may carry indication information indicating a transmission resource from the transmission resource set. The transmission resource may include a time-frequency resource (to be specific, a time domain resource and a frequency domain resource). In addition, the transmission resource may further include a space domain resource, a code domain resource (such as a DMRS), a multiple access signature (signature), or the like. The time-frequency resource determined based on the indication information in the first uplink grant information is the time-frequency resource corresponding to the first uplink grant information. For example, the first uplink grant information may include an index of a time-frequency resource in the resource set.

In another example, the time-frequency resource indicated by the first uplink grant information may be a time-frequency resource corresponding to at least one of an RNTI, a CORESET, search space, or a signaling format used to receive the first uplink grant information. In other words, the time-frequency resource indicated by the first uplink grant information is implicitly indicated by using the at least one of the RNTI, the CORESET, the search space, or the signaling format used to receive the first uplink grant information. For example, the at least one of the RNTI, the CORESET, the search space, or the signaling format used to receive the first uplink grant information corresponds to a transmission resource. Optionally, the first terminal apparatus may receive a first correspondence from the network device, where the first correspondence may include a correspondence between the transmission resource and the at least one of the RNTI, the CORESET, the search space, or the signaling format used to receive the first uplink grant information. Alternatively, the first correspondence may be stored in the first terminal apparatus. For example, the correspondence may be pre-configured by the network device by using signaling, or may be defined in a protocol, or may be pre-configured in the first terminal apparatus. When receiving the first uplink grant information based on the at least one of the RNTI, the CORESET, the search space, or the signaling format, the first terminal apparatus may further determine the time-frequency resource corresponding to the first uplink grant information based on the first correspondence and the at least one of the RNTI, the CORESET, the search space, or the signaling format of the first uplink grant information. Optionally, the first correspondence may be configured in S801.

It may be understood that, in this application, for the network device that sends the first uplink grant information, the RNTI, the CORESET, the search space, or the signaling format used to receive the first uplink grant information may be referred to as an RNTI, a CORESET, search space, or a signaling format used to send the first uplink grant information.

Optionally, the at least one of the RNTI, the CORESET, the search space, or the signaling format used to receive the first uplink grant information may be allocated to one or more terminals (including the first terminal apparatus and/or the second terminal apparatus).

For example, the first correspondence includes a correspondence between an RNTI-1 and a time-frequency resource 1. When the first terminal apparatus receives the first uplink grant information based on the RNTI-1, the time-frequency resource corresponding to the first uplink grant information is the time-frequency resource 1.

It should be understood that the time-frequency resource corresponding to the first uplink grant information may be a time-frequency resource allocated by the network device to the second terminal apparatus. Therefore, the second terminal apparatus may perform uplink transmission by using the time-frequency resource.

In the first possible implementation of S802, the first uplink grant information is dynamic grant information sent by the network device. For example, according to descriptions in this application, the second terminal apparatus may send a scheduling request to the network device through a PUCCH, or the second terminal apparatus may send a buffer state to the network device through a PUSCH, and then the network device may send the first uplink grant information, to schedule uplink data transmission of the second terminal apparatus. Optionally, the first uplink grant information may include the time-frequency resource used by the second terminal apparatus to perform uplink data transmission. Optionally, the first uplink grant information may be sent by the network device in a unicast, groupcast, or broadcast manner.

For example, the first uplink grant information may be a physical layer signal. For example, the first uplink grant information is DCI, and the first uplink grant information may be sent through a PDCCH. For another example, the first grant information may alternatively be a MAC layer signal, for example, a MAC control element (control element, CE). In this case, the first grant information may be delivered through, for example, a PDSCH. A difference between the DCI and the MAC control element lies in that the DCI is usually scrambled by using a specific RNTI before being sent. Therefore, the terminal can correctly receive the DCI sent by the base station to the terminal only after determining the RNTI. However, the MAC CE does not need to be scrambled by using a specific RNTI before being received.

If the first uplink grant information is the DCI, the RNTI used by the first terminal apparatus to receive the first uplink grant information may be pre-configured by the network device by using signaling. For example, the network device may configure the RNTI for the first terminal apparatus by using an RRC message, a MAC CE, or DCI.

Alternatively, the RNTI may be calculated by the first terminal apparatus based on a resource such as the time domain resource, the frequency domain resource, the code domain resource, or the multiple access signature. For example, the network device configures, for the first terminal apparatus, a transmission resource including the time domain resource, the frequency domain resource, the code domain resource, the multiple access signature, or the like, where the transmission resource is, for example, a grant-free transmission resource. The terminal may calculate the RNTI based on the resources, and receive, based on the RNTI, the first uplink grant information sent through the PDCCH. For example, a corresponding RNTI is set for the grant-free resource, or a corresponding parameter used to calculate the RNTI is set for the grant-free resource, and is used by the first terminal apparatus to calculate the RNTI.

It should be understood that, the first uplink grant information herein may be sent by the network device to the second terminal apparatus, and the network device may configure a transmission resource including any one or more of the time domain resource, the frequency domain resource, the code domain resource, the multiple access signature, or the like for at least one terminal apparatus (including the first terminal apparatus) in advance, where the transmission resource is, for example, a grant-free transmission resource. When sending dynamic grant information (for example, the time-frequency resource indicating the second terminal apparatus to perform uplink transmission) to the second terminal apparatus, the network device calculates an RNTI of the dynamic grant information based on the configured transmission resource, and sends the dynamic grant information based on the RNTI. If the first terminal apparatus has an uplink transmission requirement, the first terminal apparatus may also calculate the RNTI based on the configured transmission resource. If the first terminal apparatus successfully receives the dynamic grant information based on the RNTI, the dynamic grant information may be used as the first uplink grant information. If the first terminal apparatus does not successfully receive the dynamic grant information based on the RNTI, it indicates that there is no uplink grant information corresponding to the time-frequency resource.

The code domain resource herein may be a DMRS resource such as a DMRS port, a preamble resource, or a sequence resource. The sequence resource includes, for example, a ZC (Zadoff-Chu) sequence, a covered-ZC (covered-ZC) sequence, a pseudo-noise (pseudo-noise, PN) sequence, a longest linear feedback shift register (M) sequence, a Golden sequence, a Reed-Muller (Reed-Muller) sequence, a discrete Fourier transform (discrete Fourier transform, DFT) sequence, an inverse discrete Fourier transform (inverse discrete Fourier transform, IDFT) sequence, or a Hadamard (Hadamard) sequence.

The multiple access signature herein includes but is not limited to a codebook (codebook), a pattern, a sequence, and the like that can be used for, that can assist, or that can enhance multi-user detection or multi-data reception, for example, a spreading sequence (spreading sequence), a spreading pattern (spreading pattern), a resource mapping pattern (resource mapping pattern), or a resource hopping pattern (resource hopping pattern).

In the first implementation, the first uplink grant information may include explicit indication information of a transmission resource and/or a transmission parameter, or the first uplink grant information may include the transmission resource and/or the transmission parameter. The transmission resource and/or the transmission parameter may be used by the first terminal apparatus to send the uplink data. In this application, the transmission resource includes but is not limited to any one or more resources such as the time domain resource, the frequency domain resource, the code domain resource, or the multiple access signature resource. The transmission parameter in this application includes but is not limited to a parameter such as an MCS, a power control parameter, or a quantity of repeated transmission times. The first terminal apparatus may send the uplink data to the network device based on the transmission resource and/or the transmission parameter.

Specifically, the first uplink grant information may specifically include resource information of the transmission resource and/or the transmission parameter. Therefore, the first uplink grant information may directly indicate the transmission resource and/or the transmission parameter. Alternatively, the first uplink grant information may indicate a transmission resource from a transmission resource set, where the transmission resource set may be indicated by the network device by using an RRC message, a MAC CE, or DCI; and/or the first uplink grant information may indicate a transmission parameter from a transmission parameter set, where the transmission parameter set may be indicated by the network device by using an RRC message, a MAC CE, or DCI.

In addition, the first uplink grant information may implicitly indicate the transmission resource and/or the transmission parameter. Optionally, the transmission resource and/or the transmission parameter may be pre-configured by the network device for the first terminal apparatus by using signaling such as RRC, DCI, or a MAC CE.

For example, as described above, the at least one of the RNTI, the CORESET, the search space, or the signaling format used to receive the first uplink grant information may correspond to the transmission resource. Therefore, after the first terminal apparatus receives the first uplink grant information, the transmission resource corresponding to the at least one of the RNTI, the CORESET, the search space, or the signaling format may be used as the transmission resource used to send the uplink data.

Similarly, the at least one of the RNTI, the CORESET, the search space, or the signaling format used to receive the first uplink grant information may correspond to the transmission parameter, and the transmission parameter corresponding to the at least one of the RNTI, the CORESET, the search space, or the signaling format may be used as the transmission parameter used to send the uplink data.

Optionally, the first terminal apparatus may receive a second correspondence from the network device, where the second correspondence may include a correspondence between the transmission parameter and the at least one of the RNTI, the CORESET, the search space, or the signaling format used to receive the first uplink grant information. Alternatively, the second correspondence may be stored in the first terminal apparatus. For example, the correspondence may be pre-configured by the network device by using signaling, or may be defined in a protocol, or may be pre-configured in the first terminal apparatus. When receiving the first uplink grant information based on the at least one of the RNTI, the CORESET, the search space, or the signaling format, the first terminal apparatus may further determine the transmission parameter based on the second correspondence and the at least one of the RNTI, the CORESET, the search space, or the signaling format of the first uplink grant information. Optionally, the second correspondence may be configured in S801.

In addition, optionally, in the first implementation of S802, the first uplink grant information may be used by the first terminal apparatus to determine a beam direction corresponding to the first uplink grant information (or may be referred to as a beam direction of the first terminal apparatus), where the first uplink grant information may include indication information of a reference signal associated with the beam direction or a beam direction identifier, or the first uplink grant information may implicitly indicate the beam direction. The beam direction may be used by the first terminal apparatus to determine whether to send the uplink data on the time-frequency resource corresponding to the first uplink grant information. For details, refer to descriptions in S804. Details are not described herein. A beam herein may be a beam used by the network device for reception.

In an example, the first uplink grant information may include beam indication information (which may also be referred to as indication information of the beam direction), used to explicitly indicate the beam direction. For example, the beam indication information may include the indication information of the reference signal associated with the beam direction or the beam direction identifier. The indication information of the reference signal associated with the beam direction includes, for example, an index of the reference signal representing the beam direction, for example, an SSB index or a CSI-RS index. The beam direction identifier may be, for example, an index or an identifier corresponding to the beam direction.

In another example, the first terminal apparatus may determine the beam direction based on the at least one of the RNTI, the CORESET, the search space, or the signaling format that is used to receive the first uplink grant information and that may correspond to the beam direction. For example, the at least one of the RNTI, the CORESET, the search space, or the signaling format used to receive the first uplink grant information may correspond to the beam direction. Therefore, after the first terminal apparatus receives the first uplink grant information, the beam direction corresponding to the at least one of the RNTI, the CORESET, the search space, or the signaling format may be used as the beam direction herein. In other words, the first uplink grant information may implicitly indicate the beam direction. Optionally, the first terminal apparatus may receive a third correspondence from the network device, where the third correspondence may include a correspondence between the beam direction and the at least one of the RNTI, the CORESET, the search space, or the signaling format used to receive the first uplink grant information. Alternatively, the third correspondence may be stored in the first terminal apparatus. For example, the correspondence may be pre-configured by the network device by using signaling, or may be defined in a protocol, or may be pre-configured in the first terminal apparatus. When receiving the first uplink grant information based on the at least one of the RNTI, the CORESET, the search space, or the signaling format, the first terminal apparatus may further determine the beam direction corresponding to the first uplink grant information based on the third correspondence and the at least one of the RNTI, the CORESET, the search space, or the signaling format of the first uplink grant information. Optionally, the third correspondence may be configured in S801.

For example, the third correspondence includes a correspondence between an RNTI-1 and an SSB-1 (or an index of the SSB-1), and includes a correspondence between an RNTI-2 and an SSB-2 (or an index of the SSB-2). When the first terminal apparatus receives the first uplink grant information based on the RNTI-1, the first terminal apparatus may use a beam direction associated with the SSB-1 as the beam direction, or use the SSB-1 as the beam direction. When the first terminal apparatus receives the first uplink grant information based on the RNTI-2, the first terminal apparatus may use a beam direction associated with the SSB-2 as the beam direction, or use the SSB-2 as the beam direction.

In the second possible implementation of S802, the first uplink grant information may be from the second terminal apparatus. For example, the second terminal apparatus may send the first uplink grant information to the first terminal apparatus based on the second uplink grant information from the network device.

The second terminal apparatus may send the first uplink grant information to the first terminal apparatus in a unicast (unicast), groupcast (groupcast), multicast (multicast), or broadcast (broadcast) manner through any communication link between terminals, for example, a D2D link, a sidelink (sidelink), or Bluetooth (Bluetooth). For example, the first uplink grant information may be carried on a physical sidelink control channel (physical sidelink control channel, PSCCH) or a physical sidelink shared channel (physical sidelink shared channel, PSSCH).

In the second possible implementation, according to descriptions in this application, optionally, the second terminal apparatus may send a scheduling request to the network device through a PUCCH, or the second terminal apparatus may send a buffer state to the network device through a PUSCH, and the second terminal apparatus may receive the second uplink grant information from the network device. The second terminal apparatus may determine the first uplink grant information based on the received second uplink grant information, and send the first uplink grant information to the first terminal apparatus. For example, the second terminal apparatus may determine a time-frequency resource (where the time-frequency resource is a time-frequency resource corresponding to the second uplink grant information) based on the second uplink grant information, and include indication information of the time-frequency resource in the first uplink grant information. In other words, the time-frequency resource corresponding to the second uplink grant information may be the same as the time-frequency resource corresponding to the first uplink grant information.

The second terminal apparatus may determine, based on an explicit indication carried in the second uplink grant information, that the second uplink grant information is used by the second terminal apparatus to perform uplink data transmission. In other words, the second terminal apparatus may determine, based on the explicit indication carried in the second uplink grant information, that the second terminal apparatus is the primary terminal. In addition, in the second implementation, it is not excluded that the second terminal apparatus is the secondary terminal. For example, the first terminal apparatus and the second terminal apparatus are used as a group of secondary terminals, and the second terminal apparatus may be configured to forward the received uplink grant information to another secondary terminal (for example, including the first terminal apparatus).

In addition, in the second possible implementation, the first uplink grant information may further include a transmission resource (or indication information of the transmission resource) and/or a transmission parameter (or indication information of the transmission parameter) that are/is used by the first terminal apparatus to perform uplink transmission with the network device. Optionally, the second uplink grant information may include a transmission resource and/or a transmission parameter that are/is used by the second terminal apparatus to perform uplink transmission, and the transmission resource and/or the transmission parameter that are/is used by the first terminal apparatus to perform uplink transmission with the network device and that are/is in the first uplink grant information may be the same as the transmission resource and/or the transmission parameter that are/is used by the second terminal apparatus to perform uplink transmission and that are/is included in the second uplink grant information.

In a possible example, the first uplink grant information may include indication information of a transmission resource and/or a transmission parameter that are/is used and/or cannot be used by the first terminal apparatus to transmit the uplink data to the network device.

In the second possible implementation, the first uplink grant information may further include beam indication information. For example, the beam indication information may include indication information of a reference signal associated with a beam direction or a beam direction identifier. For details, refer to the descriptions of the beam indication information in the first implementation of S802 in this application. The beam direction may be indicated by the second uplink grant information, and the second uplink grant information may explicitly or implicitly indicate the beam direction. For an explicit indication manner and an implicit indication manner, refer to manners of explicitly and implicitly indicating the beam direction in the first implementation of S802. Details are not described again.

Optionally, the first uplink grant information may further include other information used by the first terminal apparatus to perform uplink transmission. For example, the information includes an identifier of the primary terminal, an identifier of the secondary terminal, or indication information indicating whether the first terminal apparatus (or the secondary terminal) is allowed to perform uplink transmission by using the first uplink grant information (or the time-frequency resource).

The identifier of the secondary terminal may explicitly indicate the secondary terminal. An identifier of the first terminal apparatus and/or the identifier of the secondary terminal are/is, for example, a UE ID, or may include other information that can be used to identify a terminal type, for example, information such as a time-frequency resource or a DMRS resource or sequence corresponding to the terminal when the terminal can be identified by using the time-frequency resource or the DMRS resource or sequence. The terminal type in this application indicates that the terminal is the primary terminal or the secondary terminal. Similarly, the identifier of the primary terminal may explicitly indicate the primary terminal (for example, the second terminal apparatus). The identifier of the primary terminal may be a UE ID of the terminal, or may include other information that can be used to identify the terminal. In addition, the identifier of the secondary terminal and the identifier of the primary terminal may also be used as an identifier of a terminal allowed to send data. If an identifier of a terminal receiving the first uplink grant information is not included in the identifier of the terminal allowed to send the data, it indicates that the terminal is not allowed to send the uplink data by using the first uplink grant information.

Optionally, in this application, after receiving the first uplink grant information, the first terminal apparatus may determine, based on the first uplink grant information, that the first terminal apparatus is used as the secondary terminal. In addition, after receiving the second uplink grant information, the second terminal apparatus may determine, based on the second uplink grant information, that the second terminal apparatus is used as the primary terminal.

In this application, when a terminal receives uplink grant information (including the first uplink grant information and/or the second uplink grant information), and the uplink grant information indicates only the primary terminal (for example, carries the identifier of the primary terminal), if the terminal determines that the terminal is not the primary terminal, for example, the identifier of the primary terminal does not include an identifier of the terminal, in an implementation, the terminal determines that the terminal is the secondary terminal; or if the terminal determines that the identifier of the primary terminal includes an identifier of the terminal, the terminal determines that the terminal is the primary terminal. Similarly, when a terminal receives uplink grant information (including the first uplink grant information and/or the second uplink grant information), and the uplink grant information indicates only the secondary terminal (for example, carries the identifier of the secondary terminal), if the terminal determines that the terminal is not the secondary terminal, for example, the identifier of the secondary terminal does not include an identifier of the terminal, in an implementation, the terminal determines that the terminal is the primary terminal; or if the terminal determines that the identifier of the secondary terminal includes an identifier of the terminal, the terminal determines that the terminal is the secondary terminal.

In addition, it should be understood that at least one of an RNTI, a CORESET, search space, or a signaling format used to receive the uplink grant information (including the first uplink grant information and/or the second uplink grant information) may correspond to the primary terminal or the secondary terminal, so that the terminal type can be implicitly indicated by using the uplink grant information. In an optional example, there is a correspondence (which may be referred to as a fourth correspondence) between the terminal type (for example, including the primary terminal and the secondary terminal) and the at least one of the RNTI, the CORESET, the search space, or the signaling format used to receive the first uplink grant information. For example, the network device configures two RNTIs: an RNTI-1 and an RNTI-2 for a terminal, and the two RNTIs are respectively associated with two types: the primary terminal and the secondary terminal. When the terminal receives a dynamic grant instruction by using the RNTI-1, the terminal determines that the terminal is the primary terminal. When the terminal receives a dynamic grant instruction by using the RNTI-2, the terminal determines that the terminal is the secondary terminal.

The indication information indicating whether the first terminal apparatus (or the secondary terminal) is allowed to perform uplink transmission by using the first uplink grant information (or the time-frequency resource) may include specific bit information in the first uplink grant information. For example, when a value of a specific bit in the first uplink grant information is "0", it indicates indication information indicating that the first terminal apparatus (or the secondary terminal) is allowed to perform uplink transmission by using the first uplink grant information (or the time-frequency resource). When a value of a specific bit is "1", it indicates indication information indicating that the first terminal apparatus (or the secondary terminal) is allowed to perform uplink transmission by using the first uplink grant information (or the time-frequency resource). For another example, when a value of a specific bit in the first uplink grant information is "1", it indicates indication information indicating that the first terminal apparatus (or the secondary terminal) is allowed to perform uplink transmission by using the first uplink grant information (or the time-frequency resource). When a value of a specific bit is "0", it indicates indication information indicating that the first terminal apparatus (or the secondary terminal) is allowed to perform uplink transmission by using the first uplink grant information (or the time-frequency resource). It may be understood that, in this application, there is no specific requirement on a name of the indication information indicating that the first terminal apparatus (or the secondary terminal) is allowed to perform uplink transmission by using the first uplink grant information (or the time-frequency resource). The indication information may alternatively have another name, for example, indication information indicating whether the secondary terminal is allowed to perform transmission, or information indicating whether only the primary terminal performs transmission.

Optionally, when the first uplink grant information includes the identifier of the first terminal apparatus, or includes the indication information indicating that the first terminal apparatus is allowed to perform uplink transmission by using the first uplink grant information (or the time-frequency resource), the first terminal apparatus may perform uplink data transmission based on the first uplink grant information. Otherwise, if the first uplink grant information does not include the identifier of the first terminal apparatus, or does not include the indication information indicating that the first terminal apparatus is allowed to perform uplink transmission by using the time-frequency resource, the first terminal apparatus does not perform uplink transmission based on the first uplink grant information (or the time-frequency resource). In other words, the first terminal apparatus ignores performing uplink transmission based on the first uplink grant information (or the time-frequency resource).

A manner of configuring at least one of the first correspondence, the second correspondence, the third correspondence, and the fourth correspondence in this application is described herein by using examples. It may be understood that the at least one of the first correspondence, the second correspondence, the third correspondence, and the fourth correspondence may be configured in S801.

In a possible example, the network device may send or indicate, to the terminal device, a correspondence between the at least one of the RNTI, the CORESET, the search space, or the signaling format and at least one of the transmission resource, the transmission parameter, the beam direction, and the terminal type. When the correspondence includes a correspondence between the transmission resource and the at least one of the RNTI, the CORESET, the search space, or the signaling format, the correspondence includes the first correspondence. When the correspondence includes a correspondence between the transmission parameter and the at least one of the RNTI, the CORESET, the search space, or the signaling format, the correspondence includes the second correspondence. When the correspondence includes a correspondence between the beam direction and the at least one of the RNTI, the CORESET, the search space, or the signaling format, the correspondence includes the third correspondence. When the correspondence includes a correspondence between the terminal type and the at least one of the RNTI, the CORESET, the search space, or the signaling format, the correspondence includes the fourth correspondence.

For example, when the correspondence includes the correspondence between the transmission resource and/or the transmission parameter and the at least one of the RNTI, the CORESET, the search space, or the signaling format, the first terminal apparatus may determine the transmission resource based on the correspondence and the at least one of the RNTI, the CORESET, the search space, or the signaling format used to receive the first uplink grant information, and send the uplink data by using the transmission resource and/or the transmission parameter. Correspondingly, the network device may receive the uplink data from the first terminal apparatus based on the transmission resource and/or the transmission parameter.

For another example, when the correspondence includes the correspondence between the beam direction and the at least one of the RNTI, the CORESET, the search space, or the signaling format, the first terminal apparatus may determine the beam direction based on the correspondence and the at least one of the RNTI, the CORESET, the search space, or the signaling format used to receive the first uplink grant information, and determine, based on the beam direction, whether to send the uplink data on the time-frequency resource corresponding to the first uplink grant information. For details, refer to descriptions in S804.

For another example, when the correspondence includes the correspondence between the terminal type and the at least one of the RNTI, the CORESET, the search space, or the signaling format, the first terminal device may determine the terminal type based on the correspondence and the at least one of the RNTI, the CORESET, the search space, or the signaling format used to receive the first uplink grant information, where the terminal type is the secondary terminal or the primary terminal. If the terminal type is the secondary terminal, the first terminal apparatus may perform a procedure shown in FIG. 8, to implement uplink opportunistic transmission or affiliated transmission.

In another example, a correspondence between the at least one of the RNTI, the CORESET, the search space, or the signaling format and at least one of the transmission resource, the transmission parameter, the beam direction, and the terminal type may be stored in the first terminal apparatus. For example, the correspondence may be pre-configured by the network device by using signaling, or may be defined in a protocol, or may be pre-configured in the first terminal apparatus. For a manner of using the correspondence, refer to the foregoing examples. Details are not described again.

In a possible implementation, when receiving the first uplink grant information, the first terminal apparatus may directly send the uplink data by using the time-frequency resource corresponding to the first uplink grant information, and does not need to perform an action of determining the beam direction in S803 or an action of determining whether the beam direction meets the preset condition in S804. For example, the base station configures the first terminal apparatus to receive the first uplink grant information only when the first terminal apparatus and the second terminal apparatus have a same beam direction. In this case, when the first terminal apparatus can receive the first uplink grant information, the first terminal apparatus may send the uplink data by using the corresponding time-frequency resource by default.

In addition, a correspondence between at least two of information such as the beam direction, the transmission resource, the transmission parameter, or the terminal type may be set by the network device or in a pre-configured or predefined manner, to implicitly indicate the information. For example, a correspondence between the beam direction and the transmission resource and/or the transmission parameter may be set, so that after determining the beam direction in any manner shown in this application, the first terminal apparatus may determine the transmission resource and/or the transmission parameter based on the correspondence between the beam direction and the transmission resource and/or the transmission parameter. Similarly, after determining the transmission resource and/or the transmission parameter in any manner shown in this application, the first terminal apparatus may also determine the beam direction based on the correspondence.

S803: The first terminal apparatus determines the beam direction based on the first uplink grant information.

The first uplink grant information obtained by the first terminal apparatus may include beam indication information (which may also be referred to as indication information of the beam direction), used to explicitly indicate the beam direction, or the first uplink grant information may be used to implicitly indicate the beam direction. For example, the beam indication information may include indication information of a reference signal associated with the beam direction or a beam direction identifier. The indication information of the reference signal associated with the beam direction includes, for example, an index of the reference signal representing the beam direction, for example, an SSB index or a CSI-RS index. The beam direction identifier may be, for example, an index or an identifier corresponding to the beam direction.

For an implicit indication solution, the first terminal apparatus may determine the beam direction based on the at least one of the RNTI, the CORESET, the search space, or the signaling format used to receive the first uplink grant information. For example, the first uplink grant information is carried in DCI, and the at least one of the RNTI, the CORESET, the search space, or the signaling format used by the first terminal apparatus to receive the first uplink grant information may correspond to the beam direction. Therefore, after the first terminal apparatus receives the first uplink grant information, the beam direction corresponding to the at least one of the RNTI, the CORESET, the search space, or the signaling format may be used as the beam direction herein. A correspondence between the beam direction and the at least one of the RNTI, the CORESET, the search space, or the signaling format used to receive the first uplink grant information may be carried in a related parameter in S801.

It may be understood that the beam direction may correspond to a transmission resource and/or a transmission parameter that are/is used by the first terminal apparatus to send the uplink data to the network device. Therefore, the transmission resource and/or the transmission parameter can be implicitly indicated.

S804: When the beam direction meets the preset condition, the first terminal apparatus sends the uplink data to the network device by using the time-frequency resource corresponding to the first uplink grant information.

For example, the preset condition includes at least one of a condition 1 and a condition 2. The condition 1 is that a signal measurement value corresponding to the beam direction meets a threshold condition. The condition 2 is that a beam direction of the first terminal apparatus includes the beam direction.

In the condition 1, the first terminal apparatus may determine, based on a measurement result of the beam direction, whether the beam direction needs to meet the preset condition. For example, when the reference signal can represent the beam direction, the first terminal apparatus determines, based on a measurement value of signal quality of the reference signal corresponding to the beam direction and a threshold condition (or a signal quality threshold), whether the beam direction meets the preset condition. The signal quality herein includes but is not limited to measurement of a reference signal received power (reference signal received power, RSRP), reference signal received quality (reference signal received quality, RSRP), a signal to interference plus noise ratio (signal to interference plus noise ratio, SINR), a received signal strength indicator (received signal strength indicator, RSSI), a path loss (path loss, PL), an angle of arrival (angle of arrival, AoA) of the signal, and a time difference of arrival (time difference of arrival, TDOA). For example, when the RSRP of the reference signal exceeds a preset RSRP threshold, the first terminal apparatus determines that the beam direction meets the preset condition.

In the condition 2, when the network device configures a transmission resource such as a grant-free transmission resource for the first terminal apparatus, the preset condition may include whether the beam direction is (or is included in) a beam direction configured by the network device for grant-free transmission of the first terminal apparatus. If the beam direction is the beam direction configured by the network device for the grant-free transmission of the first terminal apparatus, or the beam direction is included in the beam direction configured by the network device for the grant-free transmission of the first terminal apparatus, the first terminal apparatus may determine that the beam direction meets the preset condition.

It should be understood that the condition 1 and the condition 2 are exemplary conditions. During actual use, one of the condition 1 and the condition 2 may be used as the preset condition. To be specific, when determining that one of the condition 1 and the condition 2 is met, the first terminal apparatus determines that the preset condition is met. Alternatively, a combination of the condition 1 and the condition 2 may be used as the preset condition. To be specific, when determining that the condition 1 and the condition 2 are met, the first terminal apparatus determines that the preset condition is met.

It should be further understood that in S804, the first terminal apparatus may send the uplink data to the network device by using the transmission resource and/or the transmission parameter. Optionally, the transmission resource and/or the transmission parameter may be determined by the first terminal apparatus based on the first uplink grant information. For details, refer to the descriptions in S802. For example, the first uplink grant information may specifically include transmission resource information and/or the transmission parameter. For another example, the first uplink grant information may alternatively indicate a transmission resource from a transmission resource set, and/or the first uplink grant information may indicate a transmission parameter from a transmission parameter set. For still another example, the first uplink grant information may implicitly indicate the transmission resource and/or the transmission parameter. Optionally, the transmission resource and/or the transmission parameter may be pre-configured by the network device for the first terminal apparatus by using signaling such as RRC, DCI, or a MAC CE.

It may be understood that the time-frequency resource on which the first terminal apparatus sends the uplink data to the network device may be some or all of time-frequency resources corresponding to the first uplink grant information.

Correspondingly, the network device receives the data from the first terminal apparatus.

When the beam direction does not meet the preset condition, the first terminal apparatus skips sending (or ignores sending) the uplink data on the time-frequency resource corresponding to the first uplink grant information.

In addition, the second terminal apparatus may send uplink data by using the time-frequency resource corresponding to the first uplink grant information. Correspondingly, the network device receives the data from the second terminal apparatus.

Based on the procedure shown in FIG. 8, when the beam information meets the preset condition, the first terminal apparatus may send the uplink data based on the time-frequency resource originally allocated by the network device to the second terminal apparatus, so that a terminal multiplexing capability on the time-frequency resource can be improved. When the beam information does not meet the preset condition, the first terminal apparatus skips sending the uplink data based on the first uplink grant information. The first terminal apparatus determines whether the beam information meets the preset condition. The network device cannot accurately learn whether the first terminal apparatus sends the uplink data on the time-frequency resource, and the network device can only blindly detect, on the time-frequency resource, the uplink data sent by the first terminal apparatus, for example, perform blind detection based on the transmission resource and/or the transmission parameter that are/is configured in S801.

In addition, for uplink grant-free transmission, the network device cannot determine whether the terminal device performs transmission on an uplink grant-free time-frequency resource, and can only perform blind detection on the time-frequency resource.

Therefore, regardless of the uplink grant-free transmission or the uplink opportunistic transmission, the network device cannot clearly learn whether a specific terminal device performs transmission on a time-frequency resource, and needs to perform blind detection on all possible terminal devices on the time-frequency resource, to avoid missing uplink data sent by the terminal. However, the blind detection increases complexity in a receiving process of the network device, and reduces receiving performance of the network device.

To improve receiving performance of a network device and reduce processing complexity of the network device, embodiments of this application provide a data transmission method. The method may be implemented by the network device and a terminal apparatus. For example, the network device may include the network device 101 shown in FIG. 1, and the terminal apparatus may include the terminal device 102 shown in FIG. 1. It should be understood that a step performed by the terminal apparatus in the method may alternatively be performed by a component (such as a chip, a module, or a circuit) in the terminal apparatus, and/or a step performed by the network device in the method may alternatively be performed by a component (such as a chip, a module, or a circuit) in the network device. The terminal apparatus may include a first terminal apparatus and a second terminal apparatus. For the first terminal apparatus and the second terminal apparatus, refer to the descriptions of FIG. 8. Details are not described again.

As shown in FIG. 9, the data transmission method provided in embodiments of this application may include steps shown in S901 to S903. The following separately describes the steps.

S901: The first terminal apparatus sends first indication information to the second terminal apparatus.

Correspondingly, the second terminal apparatus receives the first indication information from the first terminal apparatus.

The first indication information indicates that the first terminal apparatus requests to send data to the network device.

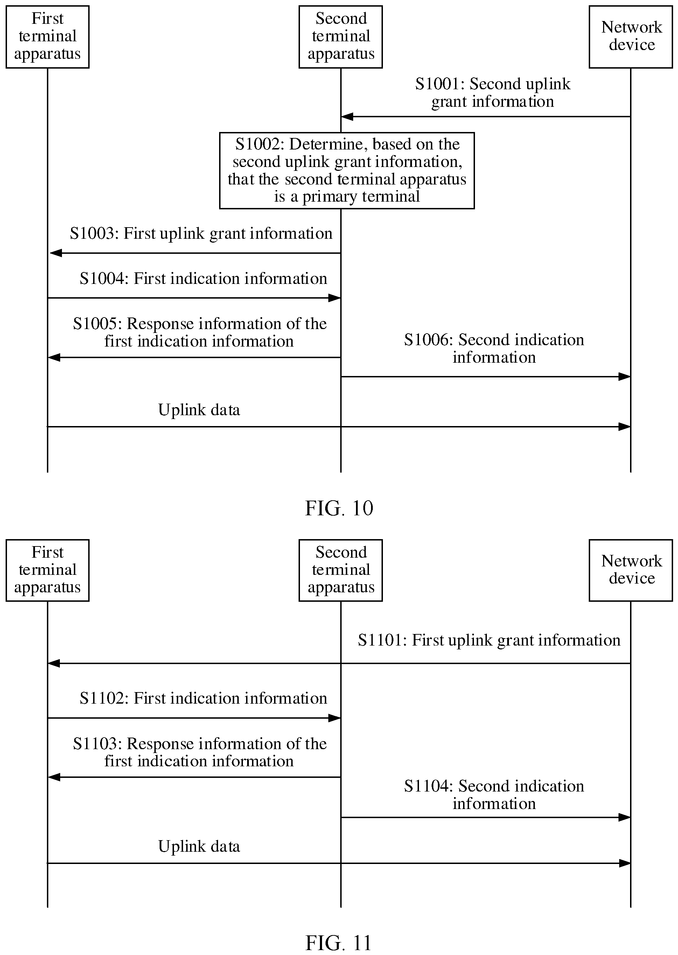

In a first possible implementation of S901, the first indication information may indicate that the first terminal apparatus performs uplink transmission. For example, in the procedure shown in FIG. 8, when the first terminal apparatus receives first uplink grant information, the first terminal apparatus may send the first indication information to the second terminal apparatus, to indicate that the first terminal apparatus sends the data to the network device based on the first uplink grant information. Indicated content may be specifically that the first terminal apparatus is to send, is sending, or has sent the data to the network device based on the first uplink grant information. In this implementation, the first indication information may be sent after the first terminal apparatus determines to perform uplink transmission. In other words, the first indication information may be sent after the first terminal apparatus determines that a condition for performing uplink transmission is met. In other words, the first indication information may be sent after the first terminal apparatus determines that the first uplink grant information is received. The following describes this implementation with reference to FIG. 10 and FIG. 11.

In a second possible implementation of S901, the first indication information may indicate that the first terminal apparatus has an uplink data sending requirement, or the first indication information may indicate that the first terminal apparatus requests to send uplink data. In this implementation, the first indication information may be sent in a multicast, groupcast, or broadcast manner.

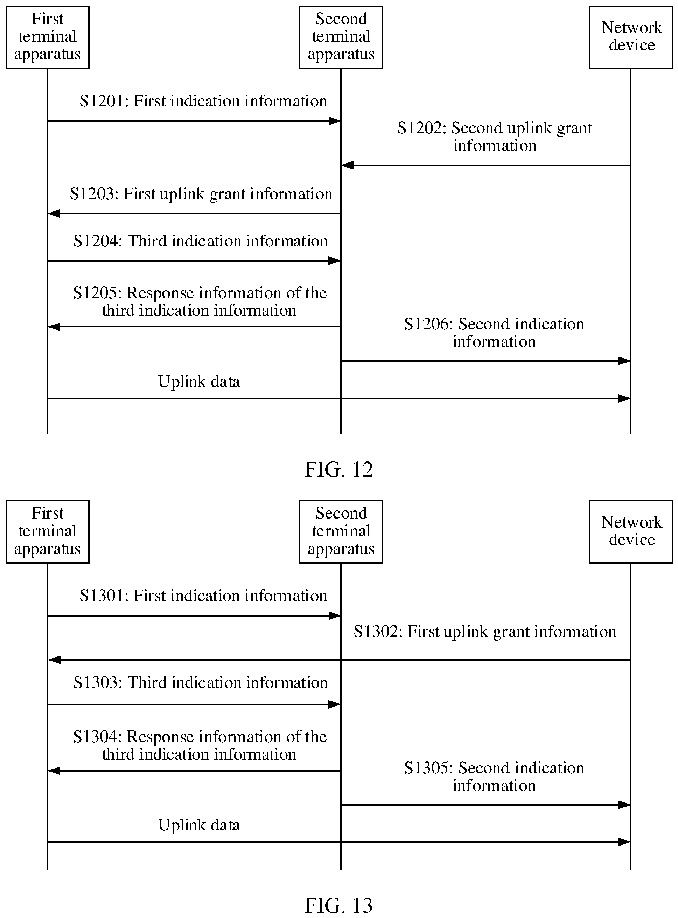

Based on this implementation, optionally, the second terminal apparatus may send first uplink grant information to the first terminal apparatus based on the first indication information, where the first uplink grant information may be used by the first terminal apparatus to perform uplink transmission. For the first uplink grant information, refer to the descriptions in the procedure in FIG. 8. In this implementation, the first indication information may be sent after the first terminal apparatus determines that the first terminal apparatus has the uplink transmission requirement. For example, optionally, the first indication information is sent before the first terminal apparatus obtains the first uplink grant information. In other words, the first indication information may be sent before the first terminal apparatus receives the first uplink grant information. Optionally, in this case, the first uplink grant information may indicate that the first terminal apparatus sends the data to the network device based on the first uplink grant information. The following describes this implementation with reference to FIG. 12 and FIG. 13.

It may be understood that, in any one of the foregoing implementations of S901, the second terminal apparatus may be configured to: receive second uplink grant information from the network device, and send the first uplink grant information to the first terminal apparatus. For an implementation in which the second terminal apparatus receives the second uplink grant information and sends the first uplink grant information to the first terminal apparatus, refer to the descriptions in S802. Details are not described again. For example, as described in S802, a time-frequency resource corresponding to the second uplink grant information is the same as a time-frequency resource corresponding to the first uplink grant information. The time-frequency resource may be used by the second terminal apparatus to send uplink data and second indication information, and/or may be used by the first terminal apparatus to send the uplink data. For the second indication information, refer to the descriptions in S902. Details are not described herein again.

Optionally, the second uplink grant information may further carry indication information of a reference signal associated with at least one beam direction or a beam direction identifier.

In addition, optionally, the second terminal apparatus may send the first indication information (or new indication information determined based on the first indication information) to the network device, to indicate that the first terminal apparatus has the uplink transmission requirement, or to indicate that the first terminal apparatus requests to perform uplink transmission. Therefore, the network device sends a related parameter of uplink opportunistic transmission and the first uplink grant information to the first terminal apparatus based on the first indication information (or the new indication information). In other words, the first terminal apparatus may send the first indication information to the second terminal apparatus before S801 and/or S802 shown in FIG. 8, and the second terminal apparatus sends the first indication information (or the new indication information determined based on the first indication information) to the network device.

Optionally, in the implementations of S901, the first indication information may further indicate a beam direction of the first terminal apparatus. The beam direction of the first terminal apparatus may be, for example, a beam direction in which the network device receives the uplink data of the first terminal apparatus.

The first indication information may include beam indication information explicitly indicating the beam direction. For example, the beam indication information may include indication information of a reference signal associated with the beam direction or a beam direction identifier. The indication information of the reference signal associated with the beam direction includes, for example, an index of the reference signal representing the beam direction, for example, an SSB index or a CSI-RS index. The beam direction identifier may be, for example, an index or an identifier corresponding to the beam direction. In the second implementation of S901, the second terminal apparatus may determine, based on a beam direction indicated by the first indication information, whether to send the first uplink grant information to the first terminal apparatus. For example, the second terminal apparatus may receive second uplink grant information from the network device, where the second uplink grant information may carry indication information of a reference signal associated with the beam direction or a beam direction identifier. When the second terminal apparatus determines that a beam direction indicated by the second uplink grant information includes the beam direction that is of the first terminal apparatus and that is indicated by the first indication information, or a beam direction that is of the second terminal apparatus and that is determined by the second terminal apparatus in another manner includes the beam direction that is of the first terminal apparatus and that is indicated by the first indication information or is consistent with the beam direction that is of the first terminal apparatus and that is indicated by the first indication information, the second terminal apparatus may send the first uplink grant information to the first terminal apparatus. In addition, if the beam direction indicated by the second uplink grant information does not include the beam direction that is of the first terminal apparatus and that is indicated by the first indication information, or the beam direction that is of the second terminal apparatus and that is determined by the second terminal apparatus in another manner does not include the beam direction that is of the first terminal apparatus and that is indicated by the first indication information or is inconsistent with the beam direction that is of the first terminal apparatus and that is indicated by the first indication information, it means that a receive beam of the network device does not include a receive beam of the uplink data sent by the first terminal apparatus, that is, the network device cannot receive the uplink data of the first terminal apparatus, or a received signal is poor. In this case, the second terminal apparatus may ignore sending the first uplink grant information to the first terminal apparatus, or the second terminal apparatus does not send the first uplink grant information to the first terminal apparatus, to improve communication reliability.

In addition, optionally, in the possible implementations of S901, the first indication information may further indicate a transmission resource and/or a transmission parameter that are/is used by the first terminal apparatus to send the data to the network device. In this application, the transmission resource includes but is not limited to any one or more resources such as a time domain resource, a frequency domain resource, a code domain resource, or a multiple access signature resource. In this application, a multiple access signature includes but is not limited to a codebook (codebook), a pattern, a sequence, and the like that can be used for, that can assist, or that can enhance multi-user detection or multi-data reception, for example, a spreading sequence (spreading sequence), a spreading pattern (spreading pattern), a resource mapping pattern (resource mapping pattern), or a resource hopping pattern (resource hopping pattern). The transmission parameter in this application includes but is not limited to a parameter such as an MCS, a power control parameter, or a quantity of repeated transmission times. The first terminal apparatus may send the uplink data to the network device based on the transmission resource and/or the transmission parameter.

For example, the code domain resource may include a code domain resource used by the first terminal apparatus to perform uplink transmission, so that the network device receives the uplink data from the first terminal apparatus based on the code domain resource, to reduce receiving complexity.

In this application, the code domain resource may include a DMRS resource such as a DMRS port, a preamble resource, or a sequence resource. The sequence resource includes, for example, a ZC (Zadoff-Chu) sequence, a covered-ZC (covered-ZC) sequence, a pseudo-noise (pseudo-noise, PN) sequence, a longest linear feedback shift register (M) sequence, a Golden sequence, a Reed-Muller (Reed-Muller) sequence, a discrete Fourier transform (discrete Fourier transform, DFT) sequence, an inverse discrete Fourier transform (inverse discrete Fourier transform, IDFT) sequence, or a Hadamard (Hadamard) sequence.

It may be understood that the transmission resource and/or the transmission parameter that are/is used by the first terminal apparatus to send the data to the network device may be determined by the first terminal apparatus based on the first uplink grant information. For a determining manner, refer to the descriptions in S802. Details are not described again. In addition, the transmission resource and/or the transmission parameter that are/is used by the first terminal apparatus to send the data to the network device may alternatively be pre-configured by the network device for the first terminal apparatus by using RRC, a MAC CE, or DCI signaling.

The following describes, in S902, a manner in which the first indication information indicates the transmission resource and/or the transmission parameter that are/is used by the first terminal apparatus to send the data to the network device. Details are not described herein.

In the implementations of S901, optionally, the first indication information may alternatively be a sequence. The sequence may indicate that the first terminal apparatus performs uplink transmission or indicate that the first terminal apparatus requests to perform uplink transmission, or indicate an identifier of the first terminal apparatus, a terminal type, a beam direction, the transmission resource, or the transmission parameter. For example, there is a correspondence between the sequence and the identifier of the first terminal apparatus, the terminal type, the beam direction, the transmission resource, or the transmission parameter.

Optionally, after receiving the first indication information in S901, the second terminal apparatus may send response information of the first indication information to the first terminal apparatus, where the response information is used to acknowledge whether the first terminal apparatus can send the data to the network device.

For example, the response information may be used to acknowledge, to the first terminal apparatus, whether the first terminal apparatus can (or is allowed to) send the uplink data to the network device. After receiving response information used to acknowledge that the first terminal apparatus can send the uplink data to the network device, the first terminal apparatus may send the uplink data to the network device. Otherwise, if the first terminal apparatus receives no response information, or response information received by the first terminal apparatus indicates that the first terminal apparatus cannot send the uplink data to the network device, the first terminal apparatus no longer sends the uplink data to the network device based on the first uplink grant information.

For example, in uplink opportunistic transmission, if the second terminal apparatus is a primary terminal, the second terminal apparatus may indicate, by using the response information, whether the first terminal apparatus can send the uplink data to the network device by using the time-frequency resource indicated by the first uplink grant information. If the first terminal apparatus receives response information that corresponds to the first indication information and that is used to acknowledge that the first terminal apparatus can send the uplink data to the network device, the first terminal apparatus may send the uplink data to the network device by using the time-frequency resource corresponding to the first uplink grant information. If the first terminal apparatus receives no response information, or response information received by the first terminal apparatus indicates that the first terminal apparatus cannot send the uplink data to the network device, the first terminal apparatus no longer sends the uplink data to the network device based on the time-frequency resource corresponding to the first uplink grant information.

In addition, the response information may further indicate the transmission resource and/or the transmission parameter that are/is used by the first terminal apparatus to perform uplink transmission.

Optionally, the foregoing first indication information and/or response information of the first indication information may be used to send the first uplink grant information to the first terminal apparatus in a unicast (unicast), groupcast (groupcast), multicast (multicast), or broadcast (broadcast) manner through, for example, a D2D link, a sidelink (sidelink), or Bluetooth (Bluetooth).

For example, the response information of the first indication information may be carried on a physical sidelink control channel (physical sidelink control channel, PSCCH) or a physical sidelink shared channel (physical sidelink shared channel, PSSCH), so that the second terminal apparatus explicitly indicates the response information to the first terminal apparatus.

In addition, the second terminal apparatus may implicitly indicate, to the first terminal apparatus, whether the first terminal apparatus can (or is allowed to) send the uplink data to the network device. In this case, information, a signal, a sequence, or the like sent by the second terminal apparatus to the first terminal apparatus may not correspond to a specific meaning, and different meanings may be distinguished by using resources carrying the information, the signal, or the sequence. For example, a time-frequency resource carrying the second terminal apparatus sends the information, the signal, or the sequence to the first terminal apparatus corresponds to a specific meaning of the response information. When the second terminal apparatus sends the response information to the first terminal apparatus by using a first resource, it indicates that the uplink data can be sent to the network device by using the time-frequency resource indicated by the first uplink grant information. Alternatively, when the second terminal apparatus sends the response information to the first terminal apparatus by using a second resource, it indicates that the uplink data cannot be sent to the network device by using the time-frequency resource indicated by the first uplink grant information. Alternatively, the information, the signal, or the sequence sent by the second terminal apparatus to the first terminal apparatus corresponds to a specific meaning of the response information. For example, a first sequence corresponds to that the uplink data can be sent to the network device by using the time-frequency resource indicated by the first uplink grant information, or a second sequence corresponds to that the uplink data cannot be sent to the network device by using the time-frequency resource indicated by the first uplink grant information. In this case, when the second terminal apparatus sends the first sequence to the first terminal apparatus, it indicates that the uplink data can be sent to the network device by using the time-frequency resource indicated by the first uplink grant information. Alternatively, when the second terminal apparatus sends the second sequence to the first terminal apparatus, it indicates that the uplink data cannot be sent to the network device by using the time-frequency resource indicated by the first uplink grant information.

S902: The second terminal apparatus sends the second indication information to the network device.

The second indication information indicates that the first terminal apparatus sends the data to the network device.

Specifically, the second indication information may indicate one or more of the following information: whether there is the first terminal apparatus sending the data to the network device, identifiers and/or a quantity of first terminal apparatuses that send the data to the network device, a beam direction of the first terminal apparatus that sends the data to the network device, or the transmission resource and/or the transmission parameter that are/is used by the first terminal apparatus that sends the data to the network device.

For example, the second terminal apparatus may determine, based on the received first indication information, whether there is the first terminal apparatus sending the data to the network device, or determine the identifiers and/or the quantity of first terminal apparatuses that send the data to the network device. For example, when the second terminal apparatus receives the first indication information sent by two first terminal apparatuses, it may be determined that the quantity of first terminal apparatuses that send the data to the network device is 2.

For a manner in which the second indication information indicates the beam direction of the first terminal apparatus, refer to the manner in which the first indication information indicates the beam direction of the first terminal apparatus. Details are not described again. For example, the first indication information and/or the second indication information may include the indication information of the reference signal associated with the beam direction or the beam direction identifier. For details, refer to the descriptions in S901.

The following uses an example in which the transmission resource includes the code domain resource to describe a manner in which the second indication information indicates whether there is the first apparatus sending the data to the network device, a manner in which the second indication information indicates the identifiers and/or the quantity of first apparatuses that send the data to the network device, and a manner in which the first indication information and/or the second indication information indicate/indicates the beam direction of the first terminal apparatus and/or the transmission resource and/or the transmission parameter that are/is used by the first terminal apparatus to send the data to the network device.

For example, two code domain resource indication manners may be considered in this process. In a first manner, the code domain resource is directly indicated in the first indication information and/or the second indication information. For example, the first indication information and/or the second indication information carry/carries resource information of the code domain resource, for example, a DMRS port number.

In a second manner, there is an association relationship between the first indication information and/or the second indication information and the code domain resource, and the network device determines the code domain resource based on the association relationship. For example, the first indication information and/or the second indication information indicate/indicates an identifier of the first terminal apparatus, and there is an association relationship between the identifier of the first terminal apparatus and the code domain resource. For another example, the first indication information and/or the second indication information are/is a sequence, and there is an association relationship between the sequence and the identifier of the first terminal apparatus or the code domain resource used by the first terminal apparatus.

For still another example, as shown in Table 1, the network device may precode affiliated transmission information of a plurality of terminal apparatuses and set up indexes, or may pre-configure or predefine an association relationship between an index of a terminal apparatus and a DMRS port. Therefore, to reduce overheads, the first indication information only needs to carry a corresponding index. For example, the network device pre-configures the association relationship that is between the index and the DMRS port and that is shown in Table 1, and the first terminal apparatus may include an index value in the first indication information, to indicate that a corresponding DMRS port is used by the first terminal apparatus to perform uplink transmission.

**Table 1**

| Index | DMRS port |
|---|---|
| 0 | DMRS 1 to DMRS 4 |
| 1 | DMRS 5 to DMRS 8 |
| ... | ... |

It may be understood that the association relationship mentioned herein may be configured by the network device for the first terminal apparatus and/or the second terminal apparatus by using an RRC message, a MAC CE, or DCI, or may be pre-configured or predefined.

Optionally, if supporting uplink opportunistic transmission or affiliated transmission or having a capability of the uplink opportunistic transmission or the affiliated transmission, the first terminal apparatus may report the capability of the affiliated transmission or the uplink opportunistic transmission to the network device, to indicate that the first terminal apparatus supports the affiliated transmission or the uplink opportunistic transmission. Further, optionally, the network device may configure an affiliated transmission mode or an uplink opportunistic transmission mode for the first terminal apparatus (for example, a terminal apparatus that supports the affiliated transmission or the uplink opportunistic transmission, or a plurality of unspecific terminal apparatuses in a broadcast manner), or configure one or more of the following information: a parameter used to receive the first grant information sent by the network device, for example, an RNTI, a CORESET, SS, or a signaling format, a parameter used to send the first indication information to the second terminal device or receive the first grant information and/or a response message of the first indication information that are/is sent by the second terminal device, for example, a PSCCH and/or PSSCH channel configuration parameter, and the transmission resource and/or the transmission parameter that are/is used to send the data. For example, the network device may indicate the code domain resource to the first terminal apparatus, indicate the association relationship between the identifier of the first terminal apparatus and the code domain resource, or indicate the association relationship between the sequence and the identifier of the first terminal apparatus or the code domain resource used by the first terminal apparatus. For another example, the transmission resource may include an available time-frequency resource and/or frequency domain resource, and the frequency domain resource is, for example, at least one DMRS port. When configuring the DMRS port, the network device may indicate the association relationship shown in Table 1.

It may be understood that, in the foregoing example, the manner in which the first indication information and/or the second indication information indicate/indicates the code domain resource is described by using the code domain resource indication manner. A manner in which the first indication information and/or the second indication information indicate/indicates other information such as the identifier of the terminal apparatus, the beam direction, the transmission resource, or the transmission parameter may be implemented with reference to the foregoing descriptions. Examples are not given one by one in this application.

Optionally, the second indication information may alternatively be a sequence, and the sequence may indicate whether there is the first terminal sending the data to the network device, the identifiers and/or the quantity of first terminal apparatuses that send the data to the network device, the beam direction of the first terminal apparatus that sends the data to the network device, or the transmission resource and/or the transmission parameter that are/is used by the first terminal apparatus that sends the data to the network device. For example, there is a correspondence between the sequence and whether there is the first terminal sending the data to the network device, the identifiers and/or the quantity of first terminal apparatuses that send the data to the network device, the beam direction of the first terminal apparatus that sends the data to the network device, or the transmission resource and/or the transmission parameter that are/is used by the first terminal apparatus that sends the data to the network device. Optionally, the second indication information may be carried in the uplink data sent by the second terminal apparatus to the network device. A time-frequency resource of the uplink data is a time-frequency resource indicated by the first uplink grant information and/or the second uplink grant information.

In addition, in S902, the second indication information may alternatively be carried in signaling such as uplink control information (uplink control information, UCI) or a MAC CE. This is not specifically limited in this application.

S903: The first terminal apparatus sends the uplink data to the network device.

Optionally, when the first terminal apparatus receives the first uplink grant information, the first terminal apparatus may send the uplink data to the network device when determining that a condition for performing uplink transmission is met. The condition includes but is not limited to that the beam direction meets either of the condition 1 and the condition 2 shown in S804.

Further, optionally, the condition for performing uplink transmission may include a condition 3. In the condition 3, for example, the first terminal apparatus determines that the transmission resource used by the first terminal apparatus to send the uplink data to the network device does not conflict with a transmission resource used by the second terminal apparatus to send the uplink data to the network device, to reduce uplink transmission interference between the first terminal apparatus and the second terminal apparatus. "No conflict" herein means that the transmission resource used by the first terminal apparatus to send the uplink data to the network device is different from the transmission resource used by the second terminal apparatus to send the uplink data to the network device. For example, code domain resources respectively used by the first terminal apparatus and the second terminal apparatus are orthogonal, or orthogonality of the code domain resources exceeds a set threshold.

In an example, as described in S901, after receiving the first indication information from the first terminal apparatus, the second terminal apparatus may send the response information of the first indication information to the first terminal apparatus, to acknowledge, to the first terminal apparatus, that the first terminal apparatus can and/or cannot perform affiliated transmission. Optionally, if the first indication information indicates the transmission resource used by the first terminal apparatus to send the uplink data to the network device, when determining that the transmission resource used by the first terminal apparatus to send the uplink data to the network device does not conflict with the transmission resource used by the second terminal apparatus to send the uplink data to the network device, the second terminal apparatus may send, to the first terminal apparatus, response information used to acknowledge that the first terminal apparatus can send the data to the network device. If the second terminal apparatus determines that the transmission resource used by the first terminal apparatus to send the uplink data to the network device conflicts with the transmission resource used by the second terminal apparatus to send the uplink data to the network device, the second terminal apparatus may not send the response information, or send response information indicating that the first terminal apparatus cannot send the uplink data to the network device. In this case, when receiving response information indicating that the first terminal apparatus can perform affiliated transmission, the first terminal apparatus may determine that no resource conflict occurs. Therefore, the response information may further indicate that no resource conflict occurs, that is, the condition 3 is met. Otherwise, if the first terminal apparatus receives no response information, or response information received by the first terminal apparatus indicates that the first terminal apparatus cannot send the uplink data to the network device, the first terminal apparatus acknowledges that a resource conflict occurs, that is, the condition 3 is not met.

In another example, if the second terminal apparatus sends the first uplink grant information to the first terminal apparatus in S901, the second terminal apparatus may further indicate, to the first terminal apparatus, the transmission resource used by the second terminal apparatus to perform uplink transmission with the network device, so that the first terminal apparatus determines whether a resource conflict exists.

It should be understood that in S903, the first terminal apparatus may send the uplink data to the network device when any one of the condition 1 to the condition 3 is met.

It may be further understood that the transmission resource and/or the transmission parameter that are/is used by the first terminal apparatus to send the uplink data to the network device may be determined based on the first uplink grant information, or may be pre-configured by the network device for the first terminal apparatus by using RRC, a MAC CE, or DCI signaling. For details, refer to the descriptions in S802 and S804. Details are not described again.

Correspondingly, in S903, the network device receives the data from the first terminal apparatus based on the second indication information.

As described in S902, the second indication information may indicate the beam direction of the first terminal apparatus. In addition, the second indication information may indicate the transmission resource and/or the transmission parameter that are/is used by the first terminal apparatus to send the data to the network device.

It may be understood that when the second indication information indicates the beam direction of the first terminal apparatus, the network device may learn of the beam direction, and receive, based on the beam direction, the uplink data sent by the first terminal apparatus through uplink opportunistic transmission or affiliated transmission. When the second indication information indicates the transmission resource and/or the transmission parameter that are/is used by the first terminal apparatus to send the data to the network device, the network device may receive the uplink data from the first terminal apparatus by using the transmission resource and/or the transmission parameter. Therefore, receiving efficiency can be improved, blind detection can be reduced, receiving complexity of the network device can be reduced, and data transmission performance can be improved.

In addition, optionally, the second indication information may further indicate whether there is the first terminal apparatus sending the data to the network device, or indicate the identifiers and/or the quantity of first apparatuses that send the data to the network device. The network device may learn, based on the second indication information, whether there is the first terminal apparatus sending the data, and/or learn of the quantity of first terminal apparatuses that send the data, to improve a success rate of detecting, by the network device, that the first terminal apparatus sends the data.

Optionally, the second terminal apparatus in this application may send capability information to the network device, to indicate that the second terminal apparatus has a capability of supporting a communication action in this application. For example, before S902, the second terminal apparatus may send the capability information to the network device. For example, the capability information may indicate that the second terminal apparatus supports receiving information (for example, the first indication information) of the first terminal apparatus (or another terminal that performs affiliated transmission) through a link between terminals, and supports sending information (for example, the second indication information) to the network device.

The following describes the data transmission method provided in embodiments of this application with reference to FIG. 10 to FIG. 13. As described above, in procedures shown in FIG. 10 and FIG. 11, first indication information may indicate that a first terminal apparatus performs uplink transmission, in other words, a sending occasion of the first indication information is after the first terminal apparatus obtains first uplink grant information. In FIG. 10, the first uplink grant information received by the first terminal apparatus is from a second terminal apparatus. In FIG. 11, the first uplink grant information received by the first terminal apparatus is from a network device.

In addition, in procedures shown in FIG. 12 and FIG. 13, first indication information may indicate that a first terminal apparatus has an uplink data sending requirement, or the first indication information may indicate that the first terminal apparatus requests to send uplink data, in other words, a sending occasion of the first indication information is before the first terminal apparatus obtains first uplink grant information. In FIG. 12, the first uplink grant information received by the first terminal apparatus is from a network device. In FIG. 13, the first uplink grant information received by the first terminal apparatus is from a second terminal apparatus.

As shown in FIG. 10, a data transmission method provided in an embodiment of this application may include the following steps.

S1001: A network device determines and sends second uplink grant information.

Correspondingly, a second terminal apparatus receives the second uplink grant information.

A time-frequency resource corresponding to the second uplink grant information may be allocated by the network device to the second terminal apparatus, in other words, the second terminal apparatus may be a primary terminal. In addition, a first terminal apparatus and the second terminal apparatus may alternatively be used as secondary terminals. For example, there is no primary terminal. The second uplink grant information may be carried on a PDCCH, in other words, the second uplink grant information is DCI. Optionally, an RNTI used by the second terminal apparatus to receive the second uplink grant information may be pre-configured by a base station by using signaling.

In a possible example, if the second terminal apparatus is the primary terminal, the second uplink grant information may include information used to identify a terminal type, for example, information about the primary terminal and information about the secondary terminal. The information about the primary terminal may include information indicating the primary terminal (for example, an identifier of the primary terminal), and indication information of a transmission resource and/or a transmission parameter of the primary terminal. For the information used to identify the terminal type, and the indication information of the transmission resource and/or the transmission parameter of the primary terminal, refer to the descriptions in S802. Details are not described herein again. The information about the secondary terminal may include information indicating the secondary terminal (for example, an identifier of the secondary terminal), indication information of a beam direction, indication information indicating whether the first terminal apparatus (or the secondary terminal) is allowed to perform uplink transmission by using the time-frequency resource, or indication information of a transmission resource and/or a transmission parameter of the secondary terminal. For details, refer to the descriptions in S802.

In another possible example, if the second terminal apparatus is the secondary terminal, in other words, there is no primary terminal, the second uplink grant information may include information indicating the secondary terminal (for example, an identifier of the secondary terminal), indication information of a beam direction, indication information indicating whether the first terminal apparatus (or the secondary terminal) is allowed to perform uplink transmission by using the time-frequency resource, or indication information of a transmission resource and/or a transmission parameter of the secondary terminal. For details, refer to the descriptions in S801. For example, the secondary terminal herein includes the first terminal apparatus and the second terminal apparatus.

S1002: The second terminal apparatus determines, based on the second uplink grant information, that the second terminal apparatus is the primary terminal.

This step is an optional step. The second terminal apparatus may determine, based on the second uplink grant information, that a terminal type of the second terminal apparatus is the primary terminal, and then perform corresponding processing of the primary terminal, where the corresponding processing of the primary terminal is S1003. Further, optionally, the second uplink grant information may include the identifier of the secondary terminal or the identifier of the primary terminal. In this case, the second terminal apparatus may identify, based on the identifier of the secondary terminal or the identifier of the primary terminal in the second uplink grant information, that the second terminal apparatus is the primary terminal. For a meaning and a usage manner of the identifier of the secondary terminal or the identifier of the primary terminal, refer to the descriptions in S802. Optionally, there is a correspondence (namely, a fourth correspondence) between the terminal type (for example, the primary terminal and the secondary terminal) and at least one of an RNTI, a CORESET, search space, or a signaling format used to receive the second uplink grant information. The second terminal apparatus may determine, based on the correspondence and the at least one of the RNTI, the CORESET, the search space, or the signaling format used to receive the second uplink grant information, that the second terminal apparatus is the primary terminal or the secondary terminal.

In addition, if the second terminal apparatus determines, based on the second uplink grant information, that the second terminal apparatus is the secondary terminal, S1003 is ignored.

Optionally, after determining that the second terminal apparatus is the primary terminal, the second terminal apparatus may send uplink data on the time-frequency resource corresponding to the second uplink grant information.

S1003: The second terminal apparatus sends first uplink grant information to the first terminal apparatus.

Correspondingly, the first terminal apparatus receives the first uplink grant information.

Optionally, the second terminal apparatus may forward the second uplink grant information as the first uplink grant information to the first terminal apparatus, or the second terminal apparatus may determine the first uplink grant information based on the second uplink grant information, and send the first uplink grant information to the first terminal apparatus.

The first uplink grant information is determined based on the second uplink grant information. For example, the first uplink grant information includes at least one of a transmission resource, a beam direction, a transmission parameter, a terminal type, indication information of the transmission resource, indication information of the beam direction, indication information of the transmission parameter, or indication information (for example, including the identifier of the primary terminal and/or the identifier of the secondary terminal) of the terminal type. The at least one of the transmission resource, the beam direction, the transmission parameter, the terminal type, the indication information of the transmission resource, the indication information of the beam direction, the indication information of the transmission parameter, or the indication information of the terminal type may be carried in the second uplink grant information. Alternatively, the second terminal apparatus may determine at least one of the transmission resource, the beam direction, the transmission parameter, or the terminal type based on the at least one of the RNTI, the CORESET, the search space, or the signaling format used to receive the second uplink grant information, and include, in the first uplink grant information, the at least one of the transmission resource, the beam direction, the transmission parameter, the terminal type, the indication information of the transmission resource, the indication information of the beam direction, the indication information of the transmission parameter, or the indication information of the terminal type.

It may be understood that, for a manner in which the second terminal apparatus determines the at least one of the transmission resource, the beam direction, the transmission parameter, or the terminal type based on the at least one of the RNTI, the CORESET, the search space, or the signaling format used to receive the second uplink grant information, refer to the described manner in which the first terminal apparatus determines the at least one of the transmission resource, the beam direction, the transmission parameter, or the terminal type based on the at least one of the RNTI, the CORESET, the search space, or the signaling format used to receive the first uplink grant information in S802. For example, the network device indicates a correspondence between the at least one of the RNTI, the CORESET, the search space, or the signaling format and at least one of the transmission resource, the beam direction, or the transmission parameter to the second terminal apparatus by using an RRC message, a MAC CE, or DCI. If the correspondence includes a correspondence between an RNTI-1 and a transmission resource-1, after the second terminal apparatus receives the second uplink grant information based on the RNTI-1, the second terminal apparatus may determine that the transmission resource includes the transmission resource-1.

Optionally, the second terminal apparatus may send the first uplink grant information to the first terminal apparatus in a unicast, groupcast, or broadcast manner through a link such as a D2D link, a sidelink, or Bluetooth between the second terminal apparatus and the first terminal apparatus. For example, the first uplink grant information may be carried on a PSCCH or a PSSCH.

Optionally, the second uplink grant information may further include indication information indicating that the first terminal apparatus (or the secondary terminal) is allowed to perform uplink transmission by using the first uplink grant information (or a time-frequency resource). Otherwise, if the second uplink grant information does not include the indication information indicating that the first terminal apparatus (or the secondary terminal) is allowed to perform uplink transmission by using the first uplink grant information (or the time-frequency resource), or the second uplink grant information includes indication information indicating that the first terminal apparatus (or the secondary terminal) is not allowed to perform uplink transmission by using the first uplink grant information (or the time-frequency resource), the second terminal apparatus ignores performing S1003, and the first terminal apparatus ignores performing S1004 and S1005.

S1004: The first terminal apparatus sends first indication information to the second terminal apparatus.

As described in the first possible implementation of S901, the first indication information may indicate that the first terminal apparatus performs uplink transmission.

Optionally, the first indication information may further indicate at least one of an identifier of the first terminal apparatus, the beam direction, and the transmission resource and the transmission parameter that are used by the first terminal apparatus to send data to the network device.

Optionally, before S1004, the first terminal apparatus may determine, based on the first uplink grant information, that the first terminal apparatus is the secondary terminal.

The first terminal apparatus may determine, based on the first uplink grant information, that a terminal type of the first terminal apparatus is the secondary terminal, and then perform corresponding processing of the secondary terminal, for example, perform S1004 and/or perform S803 and S804. Further, optionally, as described in S802, the first uplink grant information may include the identifier of the secondary terminal or the identifier of the primary terminal, and the first terminal apparatus may identify, based on the identifier of the secondary terminal or the identifier of the primary terminal in the first uplink grant information, that the first terminal apparatus is the secondary terminal.

When the first uplink grant information includes only the identifier of the primary terminal, if the first terminal apparatus determines that an identifier of the first terminal apparatus is different from the identifier of the primary terminal, in an implementation, the first terminal apparatus determines that the first terminal apparatus is the secondary terminal. Similarly, when the first uplink grant information includes only the identifier of the secondary terminal, if the first terminal apparatus determines that the first terminal apparatus is not the secondary terminal, in an implementation, the first terminal apparatus determines that the first terminal apparatus is the primary terminal.

Alternatively, optionally, there is a correspondence (which may be referred to as a fourth correspondence) between a terminal type (for example, the primary terminal and the secondary terminal) and at least one of an RNTI, a CORESET, search space, or a signaling format used to receive the first uplink grant information. As described in S802, the first terminal apparatus may determine, based on the at least one of the RNTI, the CORESET, the search space, or the signaling format used to receive the first uplink grant information, that the first terminal apparatus is the secondary terminal. For example, if the at least one of the RNTI, the CORESET, the search space, or the signaling format used by the first terminal apparatus to receive the first uplink grant information corresponds to the secondary terminal, the first terminal apparatus determines that the first terminal apparatus is the secondary terminal. In addition, if the at least one of the RNTI, the CORESET, the search space, or the signaling format used by the first terminal apparatus to receive the first uplink grant information corresponds to the primary terminal, the first terminal apparatus determines that the first terminal apparatus is the primary terminal.

In addition, if the first terminal apparatus (or the second terminal apparatus) determines, based on the first uplink grant information, that the first terminal apparatus (or the second terminal apparatus) is the primary terminal, S1002 and a subsequent step are ignored. In this case, the first terminal apparatus (or the second terminal apparatus) may perform uplink data transmission in a dynamic grant manner based on the time-frequency resource indicated by the first uplink grant information.

Optionally, the first uplink grant information may further include indication information indicating that the first terminal apparatus (or the secondary terminal) is allowed to perform uplink transmission by using the first uplink grant information (or the time-frequency resource). Otherwise, if the first uplink grant information does not include the indication information indicating that the first terminal apparatus (or the secondary terminal) is allowed to perform uplink transmission by using the first uplink grant information (or the time-frequency resource), or the first uplink grant information includes indication information indicating that the first terminal apparatus (or the secondary terminal) is not allowed to perform uplink transmission by using the first uplink grant information (or the time-frequency resource), the first terminal apparatus ignores performing S1004 and a subsequent step.

Optionally, before S1004, the first terminal apparatus may further determine the beam direction based on the first uplink grant information. For a manner in which the first terminal apparatus determines the beam direction based on the first uplink grant information, refer to the descriptions in S803.

Further, optionally, the first terminal apparatus may perform S1004 after determining that a condition for performing uplink transmission is met. The condition for performing uplink transmission may include one or more of the condition 1 to the condition 3 in this application, and this is not specifically required. For the condition 1 to the condition 3, refer to the descriptions in S804 and S903. If the condition for performing uplink transmission is not met, the first terminal apparatus may ignore performing S1004, in other words, does not perform S1004, to be specific, the first terminal apparatus does not send the uplink data to the network device based on the first uplink grant information.

It may be understood that S1004 corresponds to S901.

S1005: Optionally, the second terminal apparatus sends response information of the first indication information to the first terminal apparatus.

As described in S901, the indication information may be used to acknowledge whether the first terminal apparatus sends the data to the network device. For example, the response information may be used to acknowledge, to the first terminal apparatus, whether the first terminal apparatus can (or is allowed to) send the uplink data to the network device.

In addition, the response information may further indicate that the transmission resource used by the first terminal apparatus to send the uplink data to the network device does not conflict with a transmission resource used by the second terminal apparatus to send the uplink data to the network device. Alternatively, the response information may indicate that the condition 3 is met. For details, refer to the descriptions in S903.

Optionally, the response message may further indicate the transmission resource and/or the transmission parameter that are/is used by the first terminal apparatus to send the uplink data to the network device.

S1006: The second terminal apparatus sends second indication information to the network device.

The second indication information may indicate that the first terminal apparatus sends the data to the network device.

There is no strict time sequence limitation on S1006 and S1005. For example, the second terminal apparatus may first send, to the first terminal apparatus, response information indicating that the first terminal apparatus can send the uplink data to the network device, and then send the second indication information to the network device; or may first send the second indication information to the network device, and then send, to the first terminal apparatus, response information indicating that the first terminal apparatus can send the uplink data to the network device.

S1006 corresponds to S902. For example, the second terminal apparatus sends the second indication information to the network device by using the time-frequency resource corresponding to the second uplink grant information.

The second terminal apparatus may specifically send a PUSCH on the time-frequency resource, and the PUSCH may be used to carry the uplink data and the second indication information of the second terminal apparatus.

Correspondingly, the network device receives the second indication information.

It may be understood that S903 may be further performed after S1006. To be specific, the first terminal apparatus sends the uplink data to the network device, and the network device receives the uplink data from the first terminal apparatus.

Based on the procedure shown in FIG. 10, the second terminal apparatus may send the first uplink grant information to the second terminal apparatus after receiving the second uplink grant information from the network device, and send the second indication information to the network device after receiving the first indication information from the first terminal apparatus.

The second indication information may indicate that the first terminal apparatus sends the data to the network device. Therefore, the network device may learn that the first terminal apparatus performs uplink data transmission on the time-frequency resource corresponding to the second uplink grant information, and may perform detection or reception. If the network device receives no second indication information, blind detection of the uplink data of the first terminal apparatus on the time-frequency resource corresponding to the second uplink grant information may be avoided, to reduce energy consumption and complexity of a receiving process of the network device and improve data receiving performance.

Optionally, the second indication information may further indicate whether there is the first terminal apparatus sending the data to the network device, or indicate identifiers and/or a quantity of first apparatuses that send the data to the network device. The network device may learn, based on the second indication information, whether there is the first terminal apparatus sending the data, and/or learn of the quantity of first terminal apparatuses that send the data, to improve a success rate of detecting, by the network device, that the first terminal apparatus sends the data.

Optionally, the second indication information may further indicate at least one of the beam direction of the first terminal apparatus and the transmission resource and the transmission parameter that are used by the first terminal apparatus to send the data to the network device. The network device may learn of, based on the second indication information, at least one of the beam direction of the first terminal apparatus and the transmission resource and the transmission parameter that are used by the first terminal apparatus to send the data to the network device, to receive the data. Therefore, the complexity of the receiving process of the network device can be reduced.

As shown in FIG. 11, another data transmission method provided in an embodiment of this application may include the following steps.

S1101: A network device determines and sends first uplink grant information.

Correspondingly, a first terminal apparatus receives the first uplink grant information.

S1101 corresponds to S802. As described in S802, a time-frequency resource corresponding to the first uplink grant information may be allocated by the network device to a second terminal apparatus, in other words, the second terminal apparatus may be a primary terminal. In addition, the first terminal apparatus and the second terminal apparatus may alternatively be used as secondary terminals. For example, there is no primary terminal. The first uplink grant information may be carried on a PDCCH, in other words, the first uplink grant information is DCI. In this case, an RNTI used by the first terminal apparatus to receive the first uplink grant information may be pre-configured by a base station by using signaling, or may be calculated by the first terminal apparatus based on a resource such as a time domain resource, a frequency domain resource, a code domain resource, or a multiple access signature. For details, refer to the descriptions of S802.

In a possible example, if the second terminal apparatus is the primary terminal, the first uplink grant information may include information about the primary terminal and/or information about the secondary terminal. The information about the primary terminal may include information indicating the primary terminal (for example, an identifier of the primary terminal), and indication information of a transmission resource and/or a transmission parameter of the primary terminal. For the information about the primary terminal and the indication information of the transmission resource and/or the transmission parameter of the primary terminal, refer to the descriptions in S802. Details are not described herein again. The information about the secondary terminal may include information indicating the secondary terminal (for example, an identifier of the secondary terminal), indication information of a beam direction, indication information indicating whether the first terminal apparatus (or the secondary terminal) is allowed to perform uplink transmission by using the first uplink grant information (or the time-frequency resource), or indication information of a transmission resource and/or a transmission parameter of the secondary terminal. For details, refer to the descriptions in S802.

In another possible example, if the second terminal apparatus is the secondary terminal, in other words, there is no primary terminal, the first uplink grant information may include information indicating the secondary terminal (for example, an identifier of the secondary terminal), indication information of a beam direction, indication information indicating whether the first terminal apparatus (or the secondary terminal) is allowed to perform uplink transmission by using the first uplink grant information (or the time-frequency resource), or indication information of a transmission resource and/or a transmission parameter of the secondary terminal. For details, refer to the descriptions in S802. For example, the secondary terminal herein includes the first terminal apparatus and the second terminal apparatus.

S1102: The first terminal apparatus sends first indication information to the second terminal apparatus.

S1103: Optionally, the second terminal apparatus sends response information of the first indication information to the first terminal apparatus.

S1104: The second terminal apparatus sends second indication information to the network device.

For S1102 to S1104, respectively refer to the descriptions of S1004 to S1006. Details are not described again.

It may be understood that S1102 corresponds to S901.

It may be further understood that S903 may be further performed after S1104. To be specific, the first terminal apparatus sends uplink data to the network device, and the network device receives the uplink data from the first terminal apparatus.

It may be further understood that S1104 corresponds to S902.

Based on the procedure shown in FIG. 11, the first terminal apparatus may send the first indication information to the second terminal apparatus after receiving the first uplink grant information from the network device, and the second terminal apparatus may send the second indication information to the network device after receiving the first indication information from the first terminal apparatus.

Similar to the procedure shown in FIG. 10, the second indication information may indicate that the first terminal apparatus sends the data to the network device. Therefore, the network device may learn that the first terminal apparatus performs uplink data transmission on the time-frequency resource corresponding to the first uplink grant information, and may perform reception. If the network device receives no second indication information, blind detection of the uplink data of the first terminal apparatus on the time-frequency resource corresponding to the first uplink grant information may be ignored, to reduce energy consumption and complexity of the network device and improve data receiving performance.

Optionally, the second indication information may further indicate whether there is the first terminal apparatus sending the data to the network device, or indicate identifiers and/or a quantity of first apparatuses that send the data to the network device. The network device may learn, based on the second indication information, whether there is the first terminal apparatus sending the data, and/or learn of a quantity of first terminal apparatuses that send the data, to improve a success rate of detecting, by the network device, that the first terminal apparatus sends the data.

Optionally, the second indication information may further indicate at least one of a beam direction of the first terminal apparatus and a transmission resource and a transmission parameter that are used by the first terminal apparatus to send the data to the network device. The network device may learn of, based on the second indication information, the at least one of the beam direction of the first terminal apparatus and the transmission resource and the transmission parameter that are used by the first terminal apparatus to send the data to the network device, to receive the data. Therefore, complexity of a receiving process of the network device can be reduced.

As shown in FIG. 12, another data transmission method provided in an embodiment of this application may include the following steps.

S1201: A first terminal apparatus sends first indication information.

Optionally, as described in the second possible implementation of S901, the first indication information may indicate that the first terminal apparatus has an uplink data sending requirement, or the first indication information may indicate that the first terminal apparatus requests to send uplink data. In this implementation, the first indication information may be sent in a multicast, groupcast, or broadcast manner.

Optionally, the first indication information may further indicate at least one of a beam direction of the first terminal apparatus and a transmission resource and a transmission parameter that are used by the first terminal apparatus to send the data to a network device.

Correspondingly, a second terminal apparatus receives the first indication information.

Optionally, if the first terminal apparatus sends the first indication information in the groupcast manner, the first terminal apparatus and the second terminal apparatus may join a same groupcast group in advance, or the first terminal apparatus may request to join or request to establish the groupcast group after having the uplink data requirement. This is not specifically limited.

For example, in any embodiment of this application, optionally, the network device may pre-configure the primary terminal (including the second terminal apparatus) and the secondary terminal (including the first terminal apparatus), and configure a communication link between the primary terminal and the secondary terminal. For example, the network device pre-configures a group of terminals that are at close locations or have similar beam directions and that may communicate with each other. One or more terminals in the group of terminals may be used as primary terminals to perform steps of the primary terminal in embodiments of the present invention, and one or more terminals in the group of terminals may be used as secondary terminals to perform steps of the secondary terminal in embodiments of the present invention. Optionally, in the group of terminals, one terminal may be the primary terminal, or may be the secondary terminal.

It may be understood that S1201 corresponds to S901.

S1202: The network device determines and sends second uplink grant information.

Correspondingly, the second terminal apparatus receives the second uplink grant information.

S1202 may be implemented with reference to S1001. Details are not described again.

S1203: The second terminal apparatus sends first uplink grant information to the first terminal apparatus.

For an implementation of S1203, refer to the descriptions of S1003.

Correspondingly, the first terminal apparatus receives the first uplink grant information.

Optionally, before S1203, the second terminal apparatus may determine that the second terminal apparatus is the primary terminal. For details, refer to the descriptions in S1002. Details are not described again.

Optionally, before S1203, the second terminal apparatus may further determine that a beam direction indicated by the second uplink grant information or a beam direction determined by the second terminal apparatus in another manner includes the beam direction indicated by the first indication information or is the same as the beam direction indicated by the first indication information. In other words, if the beam direction indicated by the second uplink grant information or the beam direction determined by the second terminal apparatus in the another manner includes the beam direction indicated by the first indication information or is the same as the beam direction indicated by the first indication information, S1203 is performed. Otherwise, if the beam direction indicated by the second uplink grant information or the beam direction determined by the second terminal apparatus in the another manner does not include the beam direction indicated by the first indication information or is different from the beam direction indicated by the first indication information, the second terminal apparatus may ignore performing or no longer perform S1203 and a subsequent step.

Similarly, optionally, the second terminal apparatus may further perform S1203 after determining that a transmission resource and/or a transmission parameter indicated by the second uplink grant information include/includes the transmission resource and the transmission parameter that are used by the first terminal apparatus to send the data to the network device and that are indicated by the first indication information.

S1204: Optionally, the first terminal apparatus sends third indication information to the second terminal apparatus.

The third indication information may be understood as the first indication information in the first implementation in S901. To be specific, after receiving the first uplink grant information, the first terminal apparatus may send the indication information indicating that the first terminal apparatus performs uplink transmission. For example, before sending the third indication information, the first terminal apparatus may determine, based on the first uplink grant information, that the first terminal apparatus is the secondary terminal, or determine the beam direction based on the first uplink grant information, or determine that a condition for performing uplink transmission is met. For details, refer to the descriptions in S1004.

S1205: Optionally, the second terminal apparatus sends response information of the third indication information to the first terminal apparatus.

For the response information of the third indication information, refer to the response information of the first indication information.

It may be understood that for S1204 and S1205, refer to the descriptions of S1004 and S1005. Details are not described again.

S1206: The second terminal apparatus sends second indication information to the network device.

The second indication information may indicate that the first terminal apparatus sends the data to the network device.

For S1206, refer to the descriptions of S1006. Details are not described again.

It may be understood that S903 may be further performed after S1206. To be specific, the first terminal apparatus sends the uplink data to the network device, and the network device receives the uplink data from the first terminal apparatus.

It may be understood that S1206 corresponds to S902.

Based on the procedure shown in FIG. 12, the first terminal apparatus may send the first indication information when having the uplink data sending requirement, and correspondingly, the second terminal apparatus may receive the first indication information. After receiving the second uplink grant information from the network device, the second terminal apparatus may further send the first uplink grant information to the second terminal apparatus, and send the second indication information to the network device.

The second indication information may indicate that the first terminal apparatus sends the data to the network device. Therefore, the network device may learn that the first terminal apparatus performs uplink data transmission on a time-frequency resource corresponding to the second uplink grant information, and may perform reception. If the network device receives no second indication information, blind detection of the uplink data of the first terminal apparatus on the time-frequency resource corresponding to the second uplink grant information may be avoided, to reduce energy consumption and complexity of a receiving process of the network device and improve data receiving performance.

Optionally, the second indication information may further indicate whether there is the first terminal apparatus sending the data to the network device, or indicate identifiers and/or a quantity of first apparatuses that send the data to the network device. The network device may learn, based on the second indication information, whether there is the first terminal apparatus sending the data, and/or learn of a quantity of first terminal apparatuses that send the data, to improve a success rate of detecting, by the network device, that the first terminal apparatus sends the data.

Optionally, the second indication information may further indicate the at least one of the beam direction of the first terminal apparatus and the transmission resource and the transmission parameter that are used by the first terminal apparatus to send the data to the network device. The network device may learn of, based on the second indication information, the at least one of the beam direction of the first terminal apparatus and the transmission resource and the transmission parameter that are used by the first terminal apparatus to send the data to the network device, to receive the data. Therefore, the complexity of the receiving process of the network device can be reduced.

As shown in FIG. 13, another data transmission method provided in an embodiment of this application may include the following steps.

S1301: A first terminal apparatus sends first indication information.

For S1301, refer to the descriptions of S1201. Details are not described again.

It may be understood that S1301 corresponds to S901.

S1302: A network device determines and sends first uplink grant information.

Correspondingly, the first terminal apparatus receives the first uplink grant information.

For S1302, refer to the descriptions of S1101. Details are not described again.

S1303: Optionally, the first terminal apparatus sends third indication information to a second terminal apparatus.

S1304: Optionally, the second terminal apparatus sends response information of the third indication information to the first terminal apparatus.

It may be understood that for S1303 and S1304, refer to the descriptions of S1204 to S1205. Details are not described again.

S1305: The second terminal apparatus sends second indication information to the network device.

The second indication information may indicate that the first terminal apparatus sends data to the network device.

For S1305, refer to the descriptions of S1206. Details are not described again.

It may be understood that S1305 corresponds to S902.

It may be understood that S903 may be further performed after S1305. To be specific, the first terminal apparatus sends the uplink data to the network device, and the network device receives the uplink data from the first terminal apparatus.

Based on the procedure shown in FIG. 13, the first terminal apparatus may send the first indication information when having an uplink data sending requirement. In addition, the first terminal apparatus may further receive the first uplink grant information from the network device. The second terminal apparatus may send the second indication information to the network device after receiving the first indication information from the first terminal apparatus.

The second indication information may indicate that the first terminal apparatus sends the data to the network device. Therefore, the network device may learn that the first terminal apparatus performs uplink data transmission on a time-frequency resource corresponding to the second uplink grant information, and may perform reception. If the network device receives no second indication information, blind detection of the uplink data of the first terminal apparatus on the time-frequency resource corresponding to the second uplink grant information may be avoided, to reduce energy consumption and complexity of the network device, and improve data receiving performance.

Optionally, the second indication information may further indicate whether there is the first terminal apparatus sending the data to the network device, or indicate identifiers and/or a quantity of first apparatuses that send the data to the network device. The network device may learn, based on the second indication information, whether there is the first terminal apparatus sending the data, and/or learn of the quantity of first terminal apparatuses that send the data, to improve a success rate of detecting, by the network device, that the first terminal apparatus sends the data.

Optionally, the second indication information may further indicate at least one of a beam direction of the first terminal apparatus and a transmission resource and a transmission parameter that are used by the first terminal apparatus to send the data to the network device. The network device may learn of, based on the second indication information, the at least one of the beam direction of the first terminal apparatus and the transmission resource and the transmission parameter that are used by the first terminal apparatus to send the data to the network device, to receive the data. Therefore, complexity of a receiving process of the network device can be reduced.

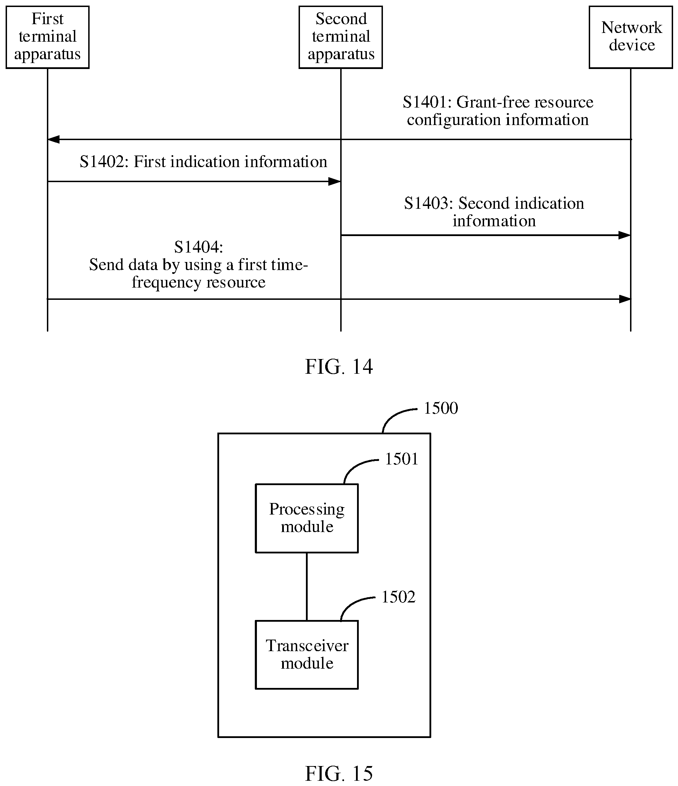

In addition, when the data transmission method shown in this application is applied to a grant-free scenario, a procedure shown in FIG. 14 may be included.

As shown in FIG. 14, another data transmission method provided in an embodiment of this application may include the following steps.

S1401: A first terminal apparatus receives grant-free resource configuration information sent by a network device, and determines a first time-frequency resource based on the grant-free resource configuration information.

Correspondingly, the network device sends the grant-free resource configuration information to the first terminal apparatus.

The network device may send the grant-free resource configuration information to the first terminal apparatus by using signaling such as RRC, a MAC CE, or DCI. The grant-free resource configuration information may be configured with one or more of the following information: an RNTI of the first terminal apparatus, a transmission resource used by the first terminal apparatus to perform grant-free transmission, for example, a time domain resource, a frequency domain resource, a code domain resource, or a multiple access signature, and a transmission parameter used by the first terminal device to perform grant-free transmission, for example, an MCS or a power control parameter.

S1402: The first terminal apparatus sends first indication information to a second terminal device.

Correspondingly, the second terminal device receives the first indication information.

The first indication information may indicate that the first terminal apparatus sends data by using the first time-frequency resource.

Optionally, as described in S901, the first indication information may further indicate at least one of an identifier of the first terminal apparatus, a beam direction, and a transmission resource and a transmission parameter that are used by the first terminal apparatus to send the data to the network device. For a specific manner in which the first indication information indicates the beam direction of the first terminal apparatus and the transmission resource and the transmission parameter that are used by the first terminal apparatus to send the data to the network device, refer to the descriptions in S901. Details are not described again.

It may be understood that S1402 corresponds to S901.

S1403: The second terminal apparatus sends second indication information to the network device.

As described in S902, the second indication information may indicate that the first terminal apparatus sends the data to the network device by using the first time-frequency resource.

The second indication information may indicate that the first terminal apparatus sends the data to the network device. Therefore, the network device may learn that the first terminal apparatus performs uplink data transmission on the first time-frequency resource, and may perform reception. If the network device receives no second indication information, blind detection of the uplink data of the first terminal apparatus on the first time-frequency resource may be avoided, to reduce energy consumption and complexity of a receiving process of the network device and improve data receiving performance.

Optionally, the second indication information may further indicate whether there is the first terminal apparatus sending the data to the network device by using the first time-frequency resource, or indicate identifiers and/or a quantity of first apparatuses that send the data to the network device by using the first time-frequency resource.

Optionally, the second indication information may further indicate at least one of the beam direction of the first terminal apparatus that sends the data to the network device by using the first time-frequency resource and the used transmission resource and transmission parameter. The network device may learn of, based on the second indication information, the at least one of the beam direction of the first terminal apparatus and the transmission resource and the transmission parameter that are used by the first terminal apparatus to send the data to the network device, to receive the data. Therefore, the complexity of the receiving process of the network device can be reduced.

For an indication manner of the second indication information, refer to the descriptions of S902. Details are not described again.

In addition, optionally, a second time-frequency resource used by the second terminal apparatus to send the second indication information to the network device may be configured by the network device for the second terminal apparatus in a dynamic grant manner such as DCI, or may be configured by the network device for the second terminal apparatus in a grant-free resource configuration manner.

It may be understood that S1403 corresponds to S902.

Optionally, the second time-frequency resource and the first time-frequency resource may be the same or may be different.

S1404: The first terminal apparatus sends the data to the network device by using the first time-frequency resource.

Correspondingly, the network device receives the data from the first terminal apparatus on the first time-frequency resource.

It may be understood that S1404 corresponds to S903.

Based on the procedure shown in FIG. 14, in the grant-free scenario, the network device may learn of uplink transmission of the first terminal apparatus based on the second indication information, so that the network device detects or receives the uplink data of the first terminal apparatus. This can reduce the complexity of the receiving process of the network device, and improve data detection or reception reliability. Optionally, the network device may further learn of, based on the second indication information, the at least one of the beam direction of the first terminal apparatus and the transmission resource and the transmission parameter that are used by the first terminal apparatus to send the data to the network device, to receive the data. Therefore, the complexity of the receiving process of the network device can be reduced.

The foregoing describes the method provided in embodiments of this application. To implement functions in the method provided in the foregoing embodiments of this application, a communication apparatus may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

As shown in FIG. 15, based on a same technical concept, an embodiment of this application further provides a data transmission apparatus 1500. The data transmission apparatus 1500 may be a data transmission apparatus, an apparatus or a component in the data transmission apparatus, or an apparatus that can be used together with the data transmission apparatus. The data transmission apparatus 1500 may be a terminal device or a network device. In a design, the data transmission apparatus 1500 may include modules that are in one-to-one correspondence with the methods/operations/steps/actions in the foregoing method embodiments. The modules may be hardware circuits or software, or may be implemented by a combination of the hardware circuits and the software. In a design, the data transmission apparatus 1500 may include a processing module 1501 and a transceiver module 1502. The transceiver module 1502 may include a sending module and/or a receiving module.

For example, when the apparatus is configured to perform the method that is performed by the second terminal apparatus and that is described in the foregoing embodiments, the apparatus may include a transceiver module 1502 and a processing module 1501. The transceiver module 1502 may be configured to receive first indication information from a first terminal apparatus, and may be further configured to send second indication information to a network device. Optionally, the processing module 1501 may be configured to parse the first indication information and/or generate the second indication information. For the first indication information and the second indication information, refer to the descriptions in the foregoing method embodiments.

Optionally, the transceiver module 1502 may be further configured to send response information of the first indication information to the first terminal apparatus. For the response information of the first indication information, refer to the descriptions in the foregoing method embodiments.

In addition, optionally, the transceiver module 1502 receives second uplink grant information from the network device, and sends first uplink grant information to the first terminal apparatus. For the first uplink grant information and/or the second uplink grant information, refer to the descriptions in the foregoing method embodiments.

For example, when the apparatus is configured to perform the method that is performed by the first terminal apparatus and that is described in the foregoing embodiments, the apparatus may include a transceiver module 1502 and a processing module 1501. The transceiver module 1502 may be configured to send first indication information to a second terminal apparatus, and may be further configured to send data to a network device. Optionally, the processing module 1501 may be configured to generate the first indication information and/or the data. For the first indication information, refer to the descriptions in the foregoing method embodiments.

Optionally, the transceiver module 1502 may be further configured to receive response information of the first indication information from the second terminal apparatus.

Optionally, the transceiver module 1502 may be further configured to receive first uplink grant information from the second terminal apparatus.

For example, when the apparatus is configured to perform the method that is performed by the network device and that is described in the foregoing embodiments, the apparatus may include a transceiver module 1502 and a processing module 1501. The transceiver module 1502 may be configured to receive second indication information from a second terminal apparatus, and may further receive data from a first terminal apparatus. For the second indication information, refer to the descriptions in the foregoing method embodiments. Optionally, the processing module 1501 may be configured to parse a wireless signal by the network device, to obtain the second indication information from the second terminal apparatus. Therefore, in other words, the processing module 1501 may be configured to obtain the second indication information.

Optionally, the transceiver module 1502 may be further configured to send second uplink grant information to the second terminal apparatus. For the second uplink grant information, refer to the descriptions in the foregoing method embodiments.

It may be understood that, the transceiver module 1502 may be further configured to perform actions represented by arrows in the embodiments shown in FIG. 8 to FIG. 14, and the processing module 1501 is further configured to perform other operations in actions represented by rectangular boxes in the embodiments shown in FIG. 8 to FIG. 14. Details are not described herein again.

Division into modules in embodiments of this application is an example, is merely division into logical functions, and may be other division during actual implementation. In addition, function modules in embodiments of this application may be integrated into one processor, or each of the modules may exist alone physically, or two or more modules may be integrated into one module. The integrated module may be implemented in a form of hardware, or may be implemented in a form of a software function module.

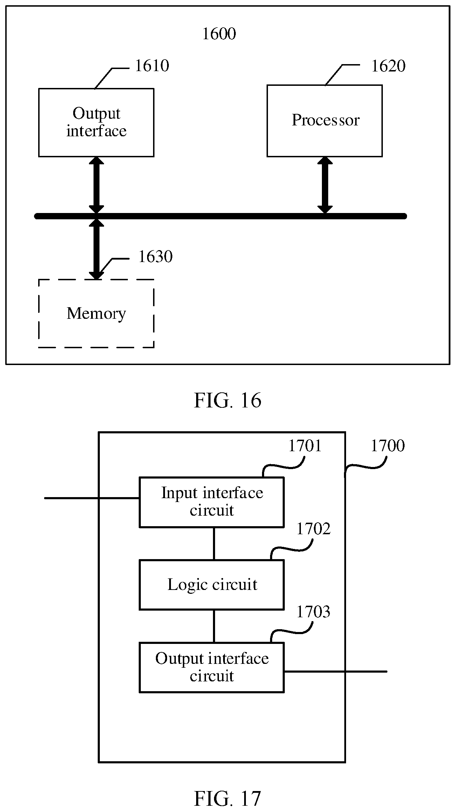

FIG. 16 shows a data transmission apparatus 1600 according to an embodiment of this application. The data transmission apparatus 1600 is configured to implement the data transmission method provided in this application. The data transmission apparatus 1600 may be an apparatus or a component located in a terminal device, may be a terminal device, or may be a network device or an apparatus or a component in the network device. The data transmission apparatus 1600 may be a data transmission apparatus, or may be an apparatus in the data transmission apparatus, or may be an apparatus that can be used together with the data transmission apparatus. The data transmission apparatus 1600 may be a chip system or a chip. In this embodiment of this application, the chip system may include a chip, or may include a chip and another discrete component. The data transmission apparatus 1600 includes at least one processor 1620, configured to implement the data transmission method provided in embodiments of this application. The data transmission apparatus 1600 may further include an output interface 1610, and the output interface may also be referred to as an input/output interface. In this embodiment of this application, the communication interface is configured to communicate with another apparatus by using a transmission medium. For example, when the data transmission apparatus 1600 is a chip, the data transmission apparatus 1600 performs transmission with another chip or component through the output interface 1610. The processor 1620 is configured to implement the method described in the foregoing method embodiments.

For example, when the apparatus is configured to perform the method that is performed by the second terminal apparatus and that is described in the foregoing embodiments, the apparatus may include an output interface 1610 and a processor 1620. The output interface 1610 may be configured to receive first indication information from a first terminal apparatus. Optionally, the processor 1620 may be configured to generate second indication information based on the first indication information. The output interface 1610 may be further configured to send the second indication information to a network device. For the first indication information, refer to the descriptions in the foregoing method embodiments.

Optionally, the output interface 1610 may be further configured to send response information of the first indication information to the first terminal apparatus. For the response information of the first indication information, refer to the descriptions in the foregoing method embodiments.

In addition, optionally, the output interface 1610 may be further configured to: receive second uplink grant information from the network device, and send first uplink grant information to the first terminal apparatus. For the first uplink grant information and/or the second uplink grant information, refer to the descriptions in the foregoing method embodiments.

For example, when the apparatus is configured to perform the method that is performed by the first terminal apparatus and that is described in the foregoing embodiments, the apparatus may include an output interface 1610 and a processor 1620. The output interface 1610 may be configured to send first indication information to a second terminal apparatus, and may be further configured to send data to a network device. Optionally, the processor 1620 may be configured to generate the first indication information and/or the data. For the first indication information, refer to the descriptions in the foregoing method embodiments.

In addition, optionally, the output interface 1610 may be further configured to receive response information of the first indication information from the second terminal apparatus. For the response information, refer to the descriptions in the foregoing method embodiments.

For example, when the apparatus is configured to perform the method that is performed by the network device and that is described in the foregoing embodiments, the apparatus may include an output interface 1610 and a processor 1620. The output interface 1610 may be configured to send and receive second indication information from a second terminal apparatus, and may further receive data from a first terminal apparatus. For the second indication information, refer to the descriptions in the foregoing method embodiments. Optionally, the processor 1620 may be configured to parse the second indication information.

Optionally, the output interface 1610 may be further configured to send second uplink grant information to the second terminal apparatus.

In addition, the output interface 1610 may be further configured to perform actions represented by arrows in the embodiments shown in FIG. 8 to FIG. 14, and the processor 1620 is further configured to perform other operations in actions represented by rectangular boxes in the embodiments shown in FIG. 8 to FIG. 14. Details are not described herein again.

The data transmission apparatus 1600 may further include at least one memory 1630, configured to store program instructions and/or data. The memory 1630 is coupled to the processor 1620. The coupling in this embodiment of this application may be an indirect coupling or a communication connection between apparatuses, units, or modules in an electrical form, a mechanical form, or another form, and is used for information exchange between the apparatuses, the units, or the modules. The processor 1620 may cooperate with the memory 1630. The processor 1620 may execute the program instructions stored in the memory 1630. At least one of the at least one memory may be integrated with the processor.

In this embodiment of this application, the memory 1630 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

In this embodiment of this application, the processor 1620 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware and a software module in the processor.

FIG. 17 shows a data transmission apparatus 1700 according to an embodiment of this application. The data transmission apparatus 1700 is configured to implement the data transmission method provided in this application. The data transmission apparatus 1700 may be an apparatus located in a terminal device, may be a terminal device, or may be a network device or an apparatus or a component located in the network device. The data transmission apparatus 1700 may be a data transmission apparatus, or may be an apparatus in the data transmission apparatus, or may be an apparatus that can be used together with the data transmission apparatus. The data transmission apparatus 1700 may be a chip system or a chip. In this embodiment of this application, the chip system may include a chip, or may include a chip and another discrete component. A part or all of the data transmission method provided in the foregoing embodiments may be implemented by hardware or software. When the data transmission method is implemented by hardware, the data transmission apparatus 1700 may include an input interface circuit 1701, a logic circuit 1702, and an output interface circuit 1703. Optionally, that the apparatus is configured to implement a function of a second terminal apparatus is used as an example. The input interface circuit 1701 may be configured to receive first indication information, the logic circuit 1702 may be configured to perform a processing action of a first terminal apparatus, for example, generate second indication information based on the first indication information, and the output interface circuit 1703 may be configured to output the second indication information. For another example, the apparatus is configured to implement a function of a first terminal apparatus. The output interface circuit 1703 may be configured to output first indication information and data, and the logic circuit 1702 may be configured to perform a processing action of the first terminal apparatus, for example, generate the first indication information and/or the data. For another example, the apparatus is configured to implement a function of a network device. The input interface circuit 1701 may be configured to receive first indication information and data, and the logic circuit 1702 may be configured to perform a processing action of the first terminal apparatus, for example, parse the first indication information and/or the data.

Optionally, during specific implementation, the data transmission apparatus 1700 may be a chip or an integrated circuit.

Some or all of operations and functions performed by the data transmission apparatus described in the foregoing method embodiments of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. When the computer program product runs on a computer, the computer is enabled to perform the foregoing method embodiments.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although preferred embodiments of this application are described, persons skilled in the art can make changes and modifications to these embodiments after they learn of a basic inventive concept. Therefore, the appended claims are intended to be construed as to cover the preferred embodiments and all changes and modifications falling within the scope of this application.

Apparently, persons skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A data transmission method, comprising:
receiving, by a second terminal apparatus, first indication information from a first terminal apparatus, wherein the first indication information indicates that the first terminal apparatus requests to send data to a network device; and
sending, by the second terminal apparatus, second indication information to the network device, wherein the second indication information indicates that the first terminal apparatus sends the data to the network device.

2. The method according to claim 1, wherein the method further comprises:
sending, by the second terminal apparatus, response information of the first indication information to the first terminal apparatus, wherein the response information is used to acknowledge whether the first terminal apparatus can send the data to the network device.

3. The method according to claim 1 or 2, wherein the method further comprises:
receiving, by the second terminal apparatus, second uplink grant information from the network device; and
sending, by the second terminal apparatus, first uplink grant information to the first terminal apparatus, wherein the first uplink grant information is determined based on the second uplink grant information, and the first indication information specifically indicates that the first terminal apparatus sends the data to the network device based on the first uplink grant information.

4. The method according to claim 3, wherein a time-frequency resource corresponding to the second uplink grant information is used by the second terminal apparatus to send data and/or the second indication information to the network device, and a time-frequency resource corresponding to the first uplink grant information is used by the first terminal apparatus to send the data to the network device.

5. The method according to claim 3 or 4, wherein the time-frequency resource corresponding to the second uplink grant information is the same as the time-frequency resource corresponding to the first uplink grant information.

6. The method according to any one of claims 3 to 5, wherein the second uplink grant information comprises indication information of a reference signal associated with at least one beam direction or a beam direction identifier, and the first uplink grant information comprises the indication information of the reference signal associated with the at least one beam direction or the beam direction identifier.

7. The method according to any one of claims 1 to 6, wherein the second indication information further indicates a beam direction of the first terminal apparatus and/or a code domain resource used by the first terminal apparatus to send the data to the network device; or
the second indication information further indicates an identifier of the first terminal apparatus, and the identifier of the first terminal apparatus is used to determine a beam direction of the first terminal apparatus and/or a code domain resource used by the first terminal apparatus to send the data to the network device.

8. The method according to any one of claims 1 to 7, wherein the first indication information further indicates the beam direction of the first terminal apparatus and/or the code domain resource used by the first terminal apparatus to send the data to the network device; or
the first indication information further indicates the identifier of the first terminal apparatus, and the identifier of the first terminal apparatus is used to determine the beam direction of the first terminal apparatus and/or the code domain resource used by the first terminal apparatus to send the data to the network device.

9. The method according to claim 7 or 8, wherein the code domain resource comprises a DMRS resource.

10. The method according to claim 9, wherein the DMRS resource comprises at least one of the following: a DMRS port number and a sequence.

11. A data transmission method, comprising:
sending, by a first terminal apparatus, first indication information to a second terminal apparatus, wherein the first indication information indicates that the first terminal apparatus requests to send data to a network device; and
sending, by the first terminal apparatus, the data to the network device.

12. The method according to claim 11, wherein the method further comprises:
receiving, by the first terminal apparatus, response information of the first indication information from the second terminal apparatus, wherein the response information is used to acknowledge whether the first terminal apparatus can send the data to the network device.

13. The method according to claim 11 or 12, wherein the method further comprises:
receiving, by the first terminal apparatus, first uplink grant information from the second terminal apparatus, wherein the first indication information specifically indicates that the first terminal apparatus sends the data to the network device based on the first uplink grant information.

14. The method according to any one of claims 11 to 13, wherein the first indication information further indicates a beam direction of the first terminal apparatus and/or a code domain resource used by the first terminal apparatus to send the data to the network device; or
the first indication information further indicates an identifier of the first terminal apparatus, and the identifier of the first terminal apparatus is used to determine a code domain resource used by the first terminal apparatus to send the data to the network device.

15. The method according to claim 14, wherein the code domain resource comprises a demodulation reference signal DMRS resource.

16. The method according to claim 15, wherein the DMRS resource comprises at least one of the following: a DMRS port number and a sequence.

17. A data transmission method, comprising:
receiving, by a network device, second indication information from a second terminal apparatus, wherein the second indication information indicates that the first terminal apparatus sends data to the network device; and
receiving, by the network device, the data from the first terminal apparatus.

18. The method according to claim 17, wherein the method further comprises:
sending, by the network device, second uplink grant information to the second terminal apparatus, wherein the second uplink grant information comprises indication information of a reference signal associated with at least one beam direction or a beam direction identifier.

19. The method according to claim 18, wherein a time-frequency resource corresponding to the second uplink grant information is used by the second terminal apparatus to send data and/or the second indication information to the network device, and/or a time-frequency resource corresponding to first uplink grant information is used by the first terminal apparatus to send the data to the network device.

20. The method according to claim 18 or 19, wherein the time-frequency resource corresponding to the second uplink grant information is the same as the time-frequency resource corresponding to the first uplink grant information.

21. The method according to any one of claims 17 to 20, wherein the second indication information further indicates a beam direction of the first terminal apparatus and/or a code domain resource used by the first terminal apparatus to send the data to the network device; or
the second indication information further indicates an identifier of the first terminal apparatus, and the identifier of the first terminal apparatus is used to determine a beam direction of the first terminal apparatus and/or a code domain resource used by the first terminal apparatus to send the data to the network device; and
the receiving, by the network device, the data from the first terminal apparatus comprises:
receiving, by the network device, the data from the first terminal apparatus based on the beam direction of the first terminal apparatus and/or the code domain resource.

22. The method according to claim 21, wherein the code domain resource comprises a demodulation reference signal DMRS resource.

23. The method according to claim 22, wherein the DMRS resource comprises at least one of the following: a DMRS port number and a sequence.

24. A data transmission apparatus, comprising a transceiver module and a processing module, wherein
the transceiver module is configured to receive first indication information from a first terminal apparatus, wherein the first indication information indicates that the first terminal apparatus requests to send data to a network device; and
the processing module is configured to send second indication information to the network device, wherein the second indication information indicates that the first terminal apparatus sends the data to the network device.

25. The apparatus according to claim 24, wherein the transceiver module is further configured to:
send response information of the first indication information to the first terminal apparatus, wherein the response information is used to acknowledge whether the first terminal apparatus can send the data to the network device.

26. The apparatus according to claim 24 or 25, wherein the transceiver module is further configured to:
receive second uplink grant information from the network device; and
send first uplink grant information to the first terminal apparatus, wherein the first uplink grant information is determined based on the second uplink grant information, and the first indication information specifically indicates that the first terminal apparatus sends the data to the network device based on the first uplink grant information.

27. The apparatus according to claim 26, wherein a time-frequency resource corresponding to the second uplink grant information is used by a second terminal apparatus to send data and/or the second indication information to the network device, and a time-frequency resource corresponding to the first uplink grant information is used by the first terminal apparatus to send the data to the network device.

28. The apparatus according to claim 26 or 27, wherein the time-frequency resource corresponding to the second uplink grant information is the same as the time-frequency resource corresponding to the first uplink grant information.

29. The apparatus according to any one of claims 26 to 28, wherein the second uplink grant information comprises indication information of a reference signal associated with at least one beam direction or a beam direction identifier, and the first uplink grant information comprises the indication information of the reference signal associated with the at least one beam direction or the beam direction identifier.

30. The apparatus according to any one of claims 24 to 29, wherein the second indication information further indicates a beam direction of the first terminal apparatus and/or a code domain resource used by the first terminal apparatus to send the data to the network device; or
the second indication information further indicates an identifier of the first terminal apparatus, and the identifier of the first terminal apparatus is used to determine a beam direction of the first terminal apparatus and/or a code domain resource used by the first terminal apparatus to send the data to the network device.

31. The apparatus according to any one of claims 24 to 30, wherein the first indication information further indicates the beam direction of the first terminal apparatus and/or the code domain resource used by the first terminal apparatus to send the data to the network device; or
the first indication information further indicates the identifier of the first terminal apparatus, and the identifier of the first terminal apparatus is used to determine the beam direction of the first terminal apparatus and/or the code domain resource used by the first terminal apparatus to send the data to the network device.

32. A data transmission apparatus, comprising a transceiver module and a processing module, wherein
the processing module is configured to determine first indication information, wherein the first indication information indicates that a first terminal apparatus requests to send data to a network device;
the transceiver module is configured to send the first indication information to a second terminal apparatus; and
the transceiver module is further configured to send data to the network device.

33. The apparatus according to claim 32, wherein the transceiver module is further configured to:
receive response information of the first indication information from the second terminal apparatus, wherein the response information is used to acknowledge whether the first terminal apparatus can send the data to the network device.

34. The apparatus according to claim 32 or 33, wherein the transceiver module is further configured to:
receive first uplink grant information from the second terminal apparatus, wherein the first indication information specifically indicates that the first terminal apparatus sends the data to the network device based on the first uplink grant information.

35. The apparatus according to any one of claims 32 to 34, wherein the first indication information further indicates a beam direction of the first terminal apparatus and/or a code domain resource used by the first terminal apparatus to send the data to the network device; or
the first indication information further indicates an identifier of the first terminal apparatus, and the identifier of the first terminal apparatus is used to determine a code domain resource used by the first terminal apparatus to send the data to the network device.

36. A data transmission apparatus, comprising a transceiver module and a processing module, wherein
the processing module is configured to obtain second indication information from a second terminal apparatus, wherein the second indication information indicates that a first terminal apparatus sends data to a network device; and
the transceiver module is configured to receive the data from the first terminal apparatus.

37. The apparatus according to claim 36, wherein the transceiver module is further configured to:
send second uplink grant information to the second terminal apparatus, wherein the second uplink grant information comprises indication information of a reference signal associated with at least one beam direction or a beam direction identifier.

38. The apparatus according to claim 37, wherein a time-frequency resource corresponding to the second uplink grant information is used by the second terminal apparatus to send data and/or the second indication information to the network device, and/or a time-frequency resource corresponding to first uplink grant information is used by the first terminal apparatus to send the data to the network device.

39. The apparatus according to claim 37 or 38, wherein the time-frequency resource corresponding to the second uplink grant information is the same as the time-frequency resource corresponding to the first uplink grant information.

40. The apparatus according to any one of claims 36 to 39, wherein the second indication information further indicates a beam direction of the first terminal apparatus and/or a code domain resource used by the first terminal apparatus to send the data to the network device; or
the second indication information further indicates an identifier of the first terminal apparatus, and the identifier of the first terminal apparatus is used to determine a beam direction of the first terminal apparatus and/or a code domain resource used by the first terminal apparatus to send the data to the network device; and
the transceiver module is specifically configured to:
receive the data from the first terminal apparatus based on the beam direction of the first terminal apparatus and/or the code domain resource.

41. A communication apparatus, comprising a processor and a memory, wherein the memory is configured to store one or more computer programs, the one or more computer programs comprise computer-executable instructions, and when the communication apparatus runs, the processor executes the one or more computer programs stored in the memory, to enable the communication apparatus to perform the method according to any one of claims 1 to 10, enable the communication apparatus to perform the method according to any one of claims 11 to 16, or enable the communication apparatus to perform the method according to any one of claims 17 to 23.

42. A chip system, wherein the chip system comprises a logic circuit and an input/output interface, wherein
the input/output interface is configured to communicate with another communication apparatus outside the chip system, and the logic circuit is configured to perform the method according to any one of claims 1 to 10;
the input/output interface is configured to communicate with another communication apparatus outside the chip system, and the logic circuit is configured to perform the method according to any one of claims 11 to 16; or
the input/output interface is configured to communicate with another communication apparatus outside the chip system, and the logic circuit is configured to perform the method according to any one of claims 17 to 23.

43. A computer-readable storage medium, wherein the computer-readable storage medium is configured to store a computer program, and when the computer program is run on a computer, the computer is enabled to perform the method according to any one of claims 1 to 10, the computer is enabled to perform the method according to any one of claims 11 to 16, or the computer is enabled to perform the method according to any one of claims 17 to 23.

44. A computer program product, wherein the computer program product comprises a computer program, and when the computer program is run on a computer, the computer is enabled to perform the method according to any one of claims 1 to 10, the computer is enabled to perform the method according to any one of claims 11 to 16, or the computer is enabled to perform the method according to any one of claims 17 to 23.

45. A communication system, wherein the communication system comprises a first terminal apparatus and a network device, wherein the first terminal apparatus is configured to perform the method according to any one of claims 1 to 10, and the network device is configured to perform the method according to any one of claims 17 to 23.

46. The system according to claim 45, further comprising a second terminal apparatus, wherein the second terminal apparatus is configured to perform the method according to any one of claims 11 to 16.
